# EUROPÄISCHE PATENTSCHRIFT

(11) **EP 3 759 372 B1**
(45) Veröffentlichungstag und Bekanntmachung des Hinweises auf die Patenterteilung: **16.08.2023**
(21) Anmeldenummer: 19709649.8
(22) Anmeldetag: 28.02.2019
(51) Int. Cl.: F16D 41/24, B62M 11/06, F16D 41/26, F16D 41/30, F16H 3/091

(54) **KUPPLUNGSANORDNUNG UND GETRIEBEEINHEIT FÜR EIN PER MUSKELKRAFT ANTREIBBARES FAHRZEUG**
CLUTCH ASSEMBLY AND TRANSMISSION UNIT FOR A MUSCLE-POWERED VEHICLE
ENSEMBLE EMBRAYAGE ET TRANSMISSION POUR VEHICULE À MOTEUR MUSCULAIRE

(30) Priorität: 01.03.2018 DE 102018104692
(43) Veröffentlichungstag der Anmeldung: 06.01.2021
(73) Patentinhaber: Pinion GmbH, 73770 Denkendorf (DE)
(72) Erfinder: SCHMITZ, Michael, 72116 Mössingen (DE)
(74) Vertreter: Witte, Weller & Partner Patentanwälte mbB
(86) Internationale Anmeldenummer: PCT/EP2019/055011
(87) Internationale Veröffentlichungsnummer: WO 2019/166563

(56) Entgegenhaltungen:
- WO-A1-2015/074885
- AT-B- 306 536
- DE-C- 117 467
- GB-A- 382 750

## Beschreibung

Die vorliegende Erfindung betrifft eine Kupplungsanordnung zum Kuppeln von Gliedern, insbesondere als Gangschaltkupplung in einer Getriebeeinheit, mit einem ersten Glied, das eine Kupplungsverzahnung aufweist, und mit einem zweiten Glied, an dem wenigstens eine Sperrkörperanordnung verschwenkbar gelagert ist, wobei die Sperrkörperanordnung in eine Kupplungsposition verschwenkbar ist, bei der ein Mitnahmeabschnitt der Sperrkörperanordnung in die Kupplungsverzahnung greift, um das erste Glied mit dem zweiten Glied gegenüber einer Relativbewegung in einer ersten Richtung fomschlüssig zu koppeln und wobei die Sperrkörperanordnung in eine Freigabeposition verschwenkbar ist, bei der der Mitnahmeabschnitt der Sperrkörperanordnung nicht in die Kupplungsverzahnung greift.

Ferner betrifft die vorliegende Erfindung eine Getriebeeinheit, insbesondere für ein per Muskelkraft antreibbares Fahrzeug, mit einem Zahnrad, das ein erstes Drehglied bildet und das drehbar an einer Getriebewelle gelagert ist, die ein zweites Drehglied bildet, wobei das Zahnrad mittels einer Kupplungsanordnung in einer Antriebsdrehrichtung mit der Getriebewelle verbindbar ist.

Eine Kupplungsanordnung der oben beschriebenen Art sowie eine Getriebeeinheit der oben beschriebenen Art sind bekannt aus dem Dokument EP 2 379 402 B2.

Getriebeeinheiten der oben beschriebenen Art dienen dazu, Muskelkraft zu über- bzw. zu untersetzen und dadurch das Antreiben des Fahrzeugs zu erleichtern. Das Fahrzeug ist in vielen Fällen ein Fahrrad, kann jedoch auch ein Dreirad sein, ein mit Muskelkraft angetriebenes Fahrzeug mit vier Rädern etc.

Grundsätzlich existieren drei Arten von Gangschaltungen für mit Muskelkraft angetriebene Fahrzeuge, und zwar Kettenschaltungen, Nabenschaltungen und Fahrradzentralgetriebe.

Kettenschaltungen haben sich in den letzten Jahrzehnten im Wesentlichen nicht verändert. Eine Kette überträgt die Antriebskraft von einer Tretkurbel zu einer Hinterachse des Fahrzeuges, wobei ein an der Hinterachse montiertes Ritzelpaket mit bis zu zwölf Ritzeln montiert ist, zwischen denen mittels eines am Rahmen befestigten Schaltwerks eine zu führende Kette hin- und hergeschaltet werden kann. Ferner sind die meisten Fahrräder zusätzlich mit einer Schaltung am Kettenblatt des Tretlagers ausgestattet. Dabei sind bis zu drei Kettenblätter an der Tretkurbel angebracht, zwischen denen mittels eines am Rahmen befestigten Umwerfers hin- und hergeschaltet werden kann. Derartige Kettenschaltungen bieten bis zu 30 Gänge, wobei systembedingt viele Gänge redundant sind. Durch hohe Reibverluste, bedingt durch einen diagonalen Kettenverlauf, können einige Gänge nicht oder nur eingeschränkt genutzt werden.

Nachteilig bei dem Prinzip der Kettenschaltung ist neben der Vielzahl von redundanten Gängen und den Reibverlusten, dass die Komponenten offen liegen und daher Umwelteinflüssen wie Wasser und Schmutz direkt ausgesetzt sind. Ferner kann die Kettenschaltung durch Stöße leicht beschädigt bzw. verstellt werden.

Die zweite Art von handelsüblichen Fahrradschaltungen ist die Nabenschaltung. Im Gegensatz zur Kettenschaltung versteht man hierunter ein in das Nabengehäuse der Hinterachse eingebautes Getriebe. Nabenschaltungen weisen üblicherweise keine außen liegenden Schaltungskomponenten auf und sind daher stoßunempfindlich und Umwelteinflüssen weniger ausgesetzt als die Kettenschaltung. Eine Nabenschaltung, wie sie beispielsweise aus der DE 197 20 794 A1 bekannt ist, kann derzeit bis zu 14 Gänge realisieren. Nachteilig ist ein Erhöhen des Gewichtes der rotierenden Massen. Der Schwerpunkt des Fahrrades verlagert sich zur Hinterachse, was sich insbesondere bei hinterrad-gefederten Mountainbikes ungünstig auf die Fahreigenschaften auswirkt.

Eine weitere Nabenschaltung ist aus dem Dokument EP 0 383 350 B1 bekannt, bei der zwei Planetengetriebe koaxial zu einer gehäusefesten Nabe angeordnet sind. Die Eingangswelle ist mit Planetenträgern verbindbar. Über eine drehbare Schaltvorrichtung sind die Sonnenräder der Planetengetriebe mit der gehäusefesten Nabe drehfest verbindbar, um unterschiedliche Übersetzungsverhältnisse einzurichten. Nachteilig ist es, dass das Gesamtgetriebe kompliziert ist und bezogen auf die Anzahl der realisierbaren Gänge vergleichsweise kostenaufwendig ist und ein hohes Gewicht mit sich bringt.

Die dritte Variante der Fahrradschaltungen stellen die im Bereich des Tretlagers montierten Fahrradzentralgetriebe bzw. Tretlagergetriebe dar. Diese Art der Fahrradschaltung ist bei handelsüblichen Fahrrädern inzwischen verbreitet. Derartige Fahrradgetriebe haben den Vorteil gegenüber herkömmlichen Ketten- oder Nabenschaltungen, dass sie keine offen liegenden Komponenten aufweisen und demnach gegenüber Stößen und Umwelteinflüssen geschützt sind. Der Schwerpunkt des Fahrrades verlagert sich in die Mitte, wobei gleichzeitig die Summe der ungefederten Masse reduziert wird.

Aus dem Dokument US 5,924,950 A ist ein Fahrradgetriebe bekannt, mit einer Eingangswelle, an der eine Mehrzahl von Antriebsrädern gelagert ist, und einer Vorgelegewelle, an der eine entsprechende Anzahl von schaltbaren angetriebenen Rädern gelagert ist. Die schaltbaren Räder werden mittels mehrerer in der Vorgelegewelle angeordneten, axial verschiebbaren Schaltbolzen und Freiläufen geschaltet. Die Vorgelegewelle ist über ein Planetengetriebe mit einem Ritzel als Ausgangsglied des Fahrradgetriebes verbunden. Das Ritzel ist über eine Kupplung mit einem Sonnenrad des Planetengetriebes verbunden, und das Hohlrad des Planetengetriebes kann mittels eines Bowdenzuges gebremst werden. Mit diesem Fahrradgetriebe lassen sich vierzehn Gänge realisieren. Nachteilig ist die relativ große axiale Bauform und die relativ geringe Anzahl von realisierbaren Gangstufen.

Aus dem Dokument WO 2008/089932 A1 ist ein Fahrradgetriebe bekannt, das zwei Getriebegruppen aufweist, die hintereinander geschaltet sind, so dass die Anzahl der realisierbaren Gangstufen sich durch Multiplikation der Einzelgänge der beiden Teilgetriebe ergibt. Ferner kann eine kompakte Bauform realisiert werden. Zum Schalten von Losrädern wird eine Nockenwelle axial verschoben. Das Getriebe hat in axialer Richtung einen vergleichsweise hohen Platzbedarf.

Eine Schaltvorrichtung für ein Fahrradgetriebe ist aus dem Dokument EP 1 445 088 bekannt.

Das eingangs genannte Dokument EP 2 379 402 B2 offenbart eine Schaltvorrichtung für ein gekapseltes Fahrradgetriebe, bei der eine Mehrzahl von Losrädern an einer Welle gelagert sind, wobei innerhalb der Welle ein Schaltbolzen angeordnet ist, der aufgrund eines Drehzahlüberlagerungsgetriebes mit der Welle mitdreht. Durch Betätigen des Überlagerungsgetriebes kann eine Relativverdrehung zwischen der Welle und dem Schaltbolzen realisiert werden. Das Drehzahlüberlagerungsgetriebe ist als Planetengetriebe ausgebildet. Schaltmittel in Form von schaltbaren Freiläufen bzw. verschwenkbaren Sperrkörperanordnungen sind an der Welle gelagert und durch Betätigungsabschnitte an dem Schaltbolzen betätigbar. Die Sperrkörper sind als zweiseitige Hebel ausgebildet. Die Betätigungsabschnitte sind durch radiale Ausnehmungen an dem Schaltbolzen ausgebildet. Das Dokument DE 117 467 C betrifft eine Antriebsvorrichtung für Zahnräder, mit durch Sperrklinken verkuppelbaren Teilen, wobei zwei Sperrklinken einem Rückwärtsgang zugeordnet sind und jeweils durch Eigengewicht bzw. ein daran gekoppeltes Gewicht einrückbar sind.

Das Dokument AT 306 536 B betrifft eine Freilaufnabe mit einem Klinkengesperre, das durch Fliehkraftgewichte schaltbar ist.

Ein weiterer Freilauf-Antrieb für Fahrräder ist aus dem Dokument GB 382 750 A bekannt.

Ein bei Getriebeeinheiten für mit Muskelkraft betriebene Fahrzeuge nach wie vor ungelöstes Problem ist es, einen Wechsel von Gangstufen unter Last durchzuführen. Bei Kraftfahrzeuggetrieben ist dies durch Bremsen oder Kupplungen von Planetenradsätzen generell möglich, wie sie in Wandler-Automatikgetrieben realisiert sind. Ein anderes Konzept sind Doppelkupplungsgetriebe, bei denen Gangwechsel durch überschneidende Betätigung von Reibkupplungen durchgeführt werden. All diese Systeme sind jedoch für mit Muskelkraft betriebene Fahrzeuge zu aufwendig.

Ein Schalten unter Last wäre jedoch gerade bei mit Muskelkraft betriebenen Fahrzeugen vorteilhaft, da beispielsweise bei einem Schaltvorgang an einer Steigung ein Zugkrafteinbruch vermieden werden kann.

Vor diesem Hintergrund ist es eine Aufgabe der Erfindung, eine unter Last schaltbare Kupplungsanordnung und eine damit ausgestattete Getriebeeinheit anzugeben, die insbesondere für ein mit Muskelkraft angetriebenes Fahrzeug geeignet ist.

Die obige Aufgabe wird durch eine Kupplungsanordnung gemäß Anspruch 1 gelöst, wobei die Sperrkörperanordnung einen Sperrkörperträger aufweist, der verschwenkbar an dem zweiten Glied gelagert ist, und ein Sperrkörperglied aufweist, das an dem Sperrkörperträger verschwenkbar gelagert ist und an dem der Mitnahmeabschnitt ausgebildet ist.

Bei bekannten Schaltvorrichtungen der oben beschriebenen Art ist das grundsätzliche Problem für ein Schalten unter Last darin zu sehen, dass sich die Quell-Gangstufe, also die auszulegende Gangstufe, nicht mit Sicherheit auslegen lässt. Da ein Schalten unter Last bedeutet, dass auf eine Getriebeeingangswelle nach wie vor eine Antriebskraft übertragen wird, entstehen im Bereich eines Mitnahmeabschnitts aufgrund der hohen Drehmomente hohe Reibkräfte, die ein Auslegen einer Gangstufe unmöglich machen können. Selbst zwangsgeführte Mechanismen können eine zwangsweise Auslegebewegung einer Sperrkörperanordnung in eine Freigabeposition dann häufig nicht bewerkstelligen.

Durch die erfindungsgemäße Maßnahme, die Sperrkörperanordnung durch zwei Glieder zu bilden, die quasi "seriell" miteinander verbunden sind, kann dieses grundsätzliche Problem gelöst werden. Denn durch die Zweigliedrigkeit ist es generell möglich, einerseits eine Kraft von dem zweiten Glied auf den Sperrkörperträger und von diesem auf das Sperrkörperglied zu übertragen, der dann wiederum mit seinem Mitnahmeabschnitt in die Kupplungsverzahnung greift, um auf diese Weise eine Kupplungsposition in der Antriebsrichtung zu realisieren. Andererseits ist es durch die Zweigliedrigkeit möglich, diese Kupplungsposition vergleichsweise einfach wieder aufzuheben.

Die Ausbildung der Sperrkörperanordnung durch einen Sperrkörperträger und ein Sperrkörperglied kann daher nach der Art eines "Kniehebels" ausgebildet sein bzw. aufgefasst werden. Der Schaltkörperträger ist bei dieser Ausführungsform ein einseitiger Hebel, an dem ein weiterer (vorzugsweise einseitiger) Hebel in Form des Schaltkörpergliedes verschwenkbar ist.

Die Verschwenkbarkeit des Sperrkörperträgers und des Sperrkörpergliedes erfolgt vorzugsweise durch Drehachsen, die nicht fest sind, sondern sich in Abhängigkeit von der relativen Winkellage verändern können, nach der Art eines Kurvengelenks, bei denen sich die über das Gelenk gekoppelten Glieder im Wesentlichen linienförmig berühren.

Mittels einer Kupplungsanordnung der erfindungsgemäßen Art kann in einer Getriebeeinheit eine Quell-Gangstufe auf einfache Art und Weise ausgelegt werden, selbst dann, wenn über die Sperrkörperanordnung in einer Antriebsrichtung hohe Kräfte übertragen werden und folglich hohe Reibkräfte zwischen Mitnahmeabschnitt und Kupplungsverzahnung vorhanden sind. Das Verschwenken der Sperrkörperanordnung in die Freigabeposition wird dabei vorzugsweise dadurch ermöglicht, dass das Sperrkörperglied und der Sperrkörperträger gegeneinander verschwenkt werden.

Die Kupplungsanordnung ermöglicht es beispielsweise, das erste Glied bei einer Relativbewegung der Glieder in einer Antriebsrichtung mitnehmen zu können, was beinhaltet, das erste Glied an dem zweiten Glied festlegen zu können. Das Festlegen ist dabei so zu verstehen, dass beispielsweise das erste Glied mitgenommen wird, wenn sich das zweite Glied in einer Antriebsrichtung bewegt. Andererseits kann dies auch bedeuten , dass das zweite Glied bei einer Bewegung des ersten Gliedes in einer Richtung entgegen der Antriebsrichtung mitgenommen wird.

Jedes Sperrkörperglied kann anstatt eines Mitnahmeabschnittes auch mehrere Mitnahmeabschnitte aufweisen, die gleichzeitig in mehrere Zahnflanken der Kupplungsverzahnung eingreifen. Bspw. kann ein Sperrkörperglied zwei Mitnahmeabschnitte aufweisen, die in unterschiedliche (insbesondere benachbarte) Zahnnuten der Kupplungsverzahnung eingreifen.

Die Kupplungsverzahnung ist vorzugsweise eine Radialverzahnung mit axial verlaufenden Zähnen und Zahnnuten, wie ein Keilwellen-Profil, ein Polygonprofil oder eine Kerbverzahnung, kann jedoch auch als Axialverzahnung ausgebildet sein. Der Begriff der Kupplungsverzahnung ist breit zu verstehen, insbesondere im Sinne einer Verzahnung, wie sie für formschlüssige Welle-Nabe-Verbindungen eingesetzt wird. Zahnflanken der Kupplungsverzahnung sind vorzugsweise als ebene Flächen ausgebildet (im Gegensatz zu einer Evolventenverzahnung). Die Kupplungsverzahnug ist vorzugsweise eine Geradverzahnung.

In der Freigabeposition ist die Sperrkörperanordnung vorzugsweise vollständig in dem zweiten Glied versenkt, steht also vorzugsweise nicht über den Außendurchmesser des zweiten Gliedes heraus, so dass die Kupplungsverzahnung den Sperrkörperträger und das Sperrkörperglied nicht berührt.

Das erste Glied und das zweite Glied sind vorzugsweise in zwei Richtungen relativ zueinander beweglich, wenn die Sperrkörperanordnung in der Freigabeposition ist. In der Kupplungsposition ist die relative Beweglichkeit wenigstens auf eine Richtung beschränkt.

Die Aufgabe wird somit vollkommen gelöst.

Die Glieder der Kupplungsanordnung können beide beweglich gelagert sein, oder es kann eines der Glieder gehäusefest sein. Die Glieder können wenigstens ein linear bewegliches Glied beinhalten.

Gemäß einer bevorzugten Ausführungsform ist eines der Glieder ein Drehglied, das relativ zu dem anderen verdrehbar ist, wobei das andere Glied vorzugsweise durch das Gehäuse gebildet ist oder gehäusefest ist.

Bei dieser Ausführungsform kann beispielsweise das eine Drehglied in der Freigabeposition frei in Bezug auf das erste Glied drehen und wird in der Kupplungsposition an dem anderen Glied in Drehrichtung festgehalten. Eine derartige Ausgestaltung ist beispielsweise in Getriebeeinheiten von Vorteil, bei denen ein Drehglied wie ein Planetenradglied (z. B. ein Sonnenrad oder ein Hohlrad) in Bezug auf ein Gehäuse wie ein Fahrradgetriebegehäuse festzulegen ist, um über die anderen Glieder des Planetenradsatzes eine Leistung übertragen zu können.

Von besonderem Vorzug ist es jedoch, wenn das erste Glied und/oder das zweite Glied ein Drehglied ist, das um eine Drehachse verdrehbar ist, wobei die Kupplungsanordnung dazu dient, das erste und das zweite Glied in einer Richtung drehfest miteinander zu verbinden, wobei die Antriebsrichtung eine Antriebsdrehrichtung ist.

Von besonderem Vorzug ist es, wenn beide Glieder als Drehglieder ausgebildet sind, insbesondere in Form eines Losrades in Form eines ersten Gliedes, das an einer Getriebewelle einer Getriebeeinheit verdrehbar ist, wobei die Getriebewelle ein zweites Drehglied bildet, das in Bezug auf ein Gehäuse der Getriebeeinheit um die Drehachse verdrehbar ist. In der Kupplungsposition ist das Losrad bei dieser Ausführungsform in Antriebsdrehrichtung mit der Welle verbunden, insbesondere formschlüssig verbunden. In der Freigabeposition sind das Losrad und die Welle nicht miteinander verbunden, derart, dass die Welle in Antriebsdrehrichtung gedreht werden kann, ohne das Losrad hierbei mitzunehmen.

Sofern das erste Glied ein Drehglied ist, ist die Kupplungsverzahnung vorzugsweise eine Axialverzahnung, die parallel zu der Drehachse ausgerichtet ist.

Beim Einrichten der Kupplungsposition wird von dem zweiten Glied eine Antriebskraft auf den Sperrkörperträger übertragen und die Antriebskraft wird von dem Sperrkörperträger ferner auf das Sperrkörperglied übertragen, das die Kraft dann auf das erste Glied überträgt. Dabei ist es bevorzugt, wenn die Sperrkörperanordnung in der Kupplungsposition gegenüber einem Verschwenken in Richtung der Freigabeposition mittels eines Abstützgliedes abgestützt ist.

Von besonderem Vorzug ist es, wenn der Sperrkörperträger in der Kupplungsposition gegenüber einem Verschwenken in Richtung der Freigabeposition mittels eines Abstützgliedes abgestützt ist.

Durch diese Maßnahme kann erreicht werden, dass die Kraftübertragung von dem zweiten Glied auf das erste Glied erfolgen kann, ohne dass die zweigliedrige Sperrkörperanordnung "einbricht".

Mit anderen Worten kann die Kraftübertragung erfolgen, ohne dass sich ein Relativwinkel zwischen einer Achse des Sperrkörperträgers und einer Achse des Sperrkörpergliedes ändert, also insbesondere ohne dass der Sperrkörperträger und das Sperrkörperglied gegeneinander verschwenkt werden.

Das Abstützglied ist vorzugsweise radial innerhalb der Sperrkörperanordnung angeordnet.

Von besonderem Vorzug ist es dabei, wenn das Abstützglied zwischen einer Abstützposition, in der es den Sperrkörperträger bzw. die Sperrkörperanordnung abstützt, und einer Entkupplungsposition versetzbar ist, in der das Abstützglied ein Verschwenken des Sperrkörperträgers bzw. der Sperrkörperanordnung in die Freigabeposition zulässt.

Vorzugsweise ist das Abstützglied relativ zu dem zweiten Glied verdrehbar, so dass es einerseits in die Abstützposition verbracht werden kann, bei der eine Kraftübertragung von dem zweiten Glied über die zweigliedrige Sperrkörperanordnung auf das erste Glied erfolgen kann. Andererseits kann eine Relativposition zwischen dem Abstützglied und dem zweiten Glied eingerichtet werden, bei der die Sperrkörperanordnung in die Freigabeposition gelangen kann bzw. verbleiben kann, um auf diese Weise die Freigabeposition einzurichten.

Das Abstützglied kann beispielsweise an einem Schaltbolzen angeordnet sein, wie er in dem Dokument EP 2 379 402 B1 offenbart ist, oder an einer Nockenwelle, die eine vergleichbare Funktion hat.

Generell ist es denkbar, dass der Sperrkörperträger und das Sperrkörperglied in der Kupplungsposition in einer Achse miteinander ausgerichtet sind, ein Winkel zwischen einer Sperrkörperträgerachse und einer Sperrkörpergliedachse in der Kupplungsposition also 180° beträgt. In diesem Fall ist es zum Überführen der Sperrkörperanordnung in die Freigabeposition bevorzugt, wenn auf die Sperrkörperanordnung ein gewisser Impuls ausgeübt wird, der dazu führt, dass der Sperrkörperträger und das Sperrkörperglied zueinander verschwenkt werden, derart, dass der genannte Winkel je nach Winkelfunktion kleiner wird als 180°. Der Winkel, der vorliegend auch als Kraftübertragungswinkel bezeichnet wird, wird dabei vorzugsweise auf einer dem Abstützglied abgewandten Seite von Sperrkörperträgerachse und Sperrkörpergliedachse gemessen. Der dem Kraftübertragungswinkel entsprechende Gegenwinkel wird dabei aufgrund des Verschwenkens größer als 180°. Der Gegenwinkel ist dabei dem Abstützglied zugewandt.

Erfindungsgemäß liegt in der Kupplungsposition eine Kraftwirklinie zwischen (i) einer Sperrkörperträger-Schwenkachse, die in der Kupplungsposition zwischen dem zweiten Glied und dem Sperrkörperträger eingerichtet ist, und (ii) einem Eingriffspunkt eingerichtet ist, an dem der Mitnahmeabschnitt des Sperkörpergliedes an der Kupplungsverzahnung angreift, wobei eine Sperrkörperglied-Schwenkachse, die in der Kupplungsposition zwischen dem Sperrkörperglied und dem Sperrkörperträger eingerichtet ist, in der Kupplungsposition radial versetzt gegenüber der Kraftwirklinie, vorzugsweise radial innerhalb der Kraftwirklinie.

Bei dieser Ausgestaltung ist es bevorzugt, wenn die Sperrkörperanordnung in der Kupplungsposition gegenüber einem Verschwenken in Richtung der Freigabeposition mittels eines Abstützgliedes abgestützt ist, wie oben beschrieben.

Auf diese Weise kann eine Kraftübertragung von dem zweiten Glied über den Sperrkörperträger und das Sperrkörperglied auf das erste Glied erfolgen, ohne dass die Sperrkörperanordnung einbricht. Sobald hingegen das Abstützglied in die Entkupplungsposition versetzt wird, wird die Sperrkörperanordnung zwischen dem zweiten Glied und dem ersten Glied in Umfangsrichtung zusammengedrückt, derart, dass das Sperrkörperglied und der Sperrkörperträger gegeneinander verschwenkt werden und die Sperrkörperglied-Schwenkachse radial versetzt wird, und zwar vorzugsweise radial nach innen versetzt wird, so dass zwischen dem zweiten Glied und dem ersten Glied keine Kraft mehr übertragbar ist.

Dieser Zustand kann dazu genutzt werden, um die Sperrkörperanordnung insgesamt in die Freigabeposition zu versetzen.

Bei dieser Ausgestaltung ist es von besonderem Vorzug, wenn
- in der Kupplungsposition ein Abstand zwischen der Kraftwirklinie und der Sperrkörperglied-Schwenkachse größer ist als 0 mm und kleiner ist als 5 mm vorzugsweise kleine als 1 mm und/oder wenn
- in der Kupplungsposition ein Verhältnis zwischen (i) einem Abstand zwischen der Kraftwirklinie und der Sperrkörperglied-Schwenkachse und (ii) einem Abstand zwischen der Sperrkörperglied-Schwenkachse und der Sperrkörperträger-Schwenkachse kleiner ist als 1:4 und größer ist als 0, bevorzugt kleiner ist als 1:10 und/oder wenn
- in der Kupplungsposition ein Verhältnis zwischen (i) einem Abstand zwischen der Kraftwirklinie und der Sperrkörperglied-Schwenkachse und (ii) einem Abstand zwischen der Sperrkörperglied-Schwenkachse und dem Eingriffspunkt kleiner ist als 1:4 und größer ist als 0, bevorzugt kleiner ist als 1:10.

Mit jeder einzelnen der oben genannten drei Maßnahmen oder einer beliebigen Kombination hiervon kann erreicht werden, dass von dem ersten Glied hohe Kräfte in Antriebsrichtung auf das zweite Glied übertragen werden können, obgleich aufgrund der Kräfteverhältnisse nur eine geringe Abstützkraft in einer Richtung quer hierzu erforderlich ist.

Demzufolge kann ein Reibeingriff zwischen der Sperrkörperanordnung bzw. dem Sperrkörperträger und einem Abstützglied gering gehalten werden. Es ist folglich mit relativ geringen Kräften möglich, das Abstützglied aus einer Abstützposition in eine Entkupplungsposition zu versetzen, und zwar noch während eine hohe Kraft von dem zweiten Glied auf das erste Glied übertragen wird. Insgesamt kann die Kinematik der Kupplungsanordnung optimiert werden.

Insgesamt ist es bevorzugt, wenn der Sperrkörperträger in der Kupplungsposition entlang einer Sperrkörperträgerachse ausgerichtet ist, wobei das Sperrkörperglied in der Kupplungsposition entlang einer Sperrkörpergliedachse ausgerichtet ist, wobei die Sperrkörperträgerachse und die Sperrkörpergliedachse in der Kupplungsposition unter einem Kraftübertragungswinkel größer gleich 150° und kleiner 180° zueinander ausgerichtet sind.

Von besonderem Vorzug ist es, wenn der Kraftübertragungswinkel in der Kupplungsposition größer gleich 160° ist, vorzugsweise größer gleich 165°, insbesondere größer gleich 170°.

Durch diese Maßnahme kann eine Sperrkörperglied-Schwenkachse nahe an einer Kraftwirklinie zwischen einer Sperrkörperträger-Schwenkachse und einem Eingriffspunkt des Mitnahmeabschnitts an der Kupplungsverzahnung angeordnet werden. Diese Maßnahme trägt folglich ebenfalls dazu bei, dass hohe Kräfte in Antriebsrichtung von dem zweiten Glied auf das erste Glied übertragbar sind, und zwar bei geringen Abstützkräften in einer Richtung quer hierzu.

Ferner ist es insgesamt vorteilhaft, wenn in der Kupplungsposition das Sperrkörperglied aus einer Sperrkörperglied-Kupplungsposition in eine Freilaufposition verschwenkbar ist.

Bei dieser Ausführungsform kann der Sperrkörperträger nach wie vor in seiner Sperrkörperträger-Kupplungsposition verbleiben, also insbesondere beispielsweise durch ein Abstützglied in der Sperrkörperträger-Kupplungsposition gehalten werden. Nichtsdestotrotz kann das erste Glied das zweite Glied "überholen", wobei die Freilaufwirkung eintritt, indem das Sperrkörperglied aus seiner Kupplungsposition in eine Freilaufposition versetzt wird, in der das Sperrkörperglied innerhalb einer Übergangsfläche zwischen dem ersten Glied und dem zweiten Glied liegt. Das Sperrkörperglied kann dabei von den Zähnen der Kupplungsverzahnung jeweils in die Freilaufposition verschwenkt werden.

Vorzugsweise sind der Sperrkörperträger und das Sperrkörperglied dabei so miteinander gekoppelt, insbesondere elastisch gekoppelt, dass das Sperrkörperglied aus der Freilaufposition generell in Richtung hin zu der Kupplungsposition des Sperrkörpergliedes vorgespannt ist.

Mit anderen Worten ist die Kopplung zwischen Sperrkörperträger und Sperrkörperglied vorzugsweise so, dass das Sperrkörperglied gegenüber dem sich in der Kupplungsposition befindenden Sperrkörperträger in Richtung einer Sperrkörperglied-Kupplungsposition gedrückt wird. Folglich wird das Sperrkörperglied hierbei immer versuchen, in die Zahnlücken der Kupplungsverzahnung einzugreifen. Bei einer Umkehrung der relativen Drehrichtungen wird daher das Sperrkörperglied vorzugsweise wieder in die Kupplungsverzahnung eingreifen, um das erste Glied bei einer Relativbewegung der Glieder in einer Antriebsrichtung mitnehmen zu können.

Gemäß einer weiteren bevorzugten Ausführungsform ist das Sperrkörperglied an dem Sperrkörperträger in eine Neutralposition vorgespannt, aus der sich das Sperrkörperglied in zwei entgegengesetzte Richtungen in Bezug auf die Neutralposition verschwenken lässt.

Durch ein Verschwenken hin zu der Kupplungsverzahnung lässt sich daher die Kupplungsposition einrichten. Ein Verschwenken in die entgegengesetzte Richtung ermöglicht, dass sich dann, wenn sich der Sperrkörperträger in einer Sperrkörperträger-Kupplungsposition befindet, eine Freilaufposition des Sperrkörpergliedes einrichten lässt.

Zumindest in eine Richtung ist der Schwenkwinkel des Sperrkörpergliedes in Bezug auf den Sperrkörperträger begrenzt, vorzugsweise durch Haltennasen des Sperrkörperträgers (s.u.).

Die Vorspannung des Sperrkörpergliedes an dem Sperrkörperträger in eine Neutralposition wird vorzugsweise mittels einer Federanordnung realisiert. Die Federanordnung wirkt vorzugsweise zwischen dem Sperrkörperglied, insbesondere einem Sperrkörpergliedkopf des Sperrkörpergliedes, und einer Stiftanordnung, die an dem Sperrkörperträger in Antriebsrichtung verschieblich gelagert ist. Die Stiftanordnung wird dabei von der Federanordnung innerhalb des Sperrkörperträgers gegen einen Anschlag gedrückt, derart, dass ein Teil der Stiftanordnung in Richtung einer Gelenkpfanne des zweiten Gliedes aus dem Sperrkörperträger heraustritt.

Die Federanordnung hat bei dieser Ausführungsform vorzugsweise sowohl die Funktion, das Sperrkörperglied in dessen Neutralposition an dem Sperrkörperträger vorzuspannen. Zum anderen hat die Federanordnung auch die Funktion, den Sperrkörperträger an der Gelenkpfanne des zweiten Gliedes in eine Grundposition vorzuspannen, die vorzugsweise der Freigabeposition des Sperrkörperträgers entspricht.

Gemäß einer weiteren insgesamt bevorzugten Ausführungsform weist der Sperrkörperträger an einem ersten Ende einen Sperrkörperträgerkopf auf, der einer Gelenkpfanne des zweiten Gliedes zugeordnet ist, um ein erstes Verschwenklager zwischen dem zweiten Glied und dem Sperrkörperträger zu bilden.

Der Sperrkörperträgerkopf ist dabei vorzugsweise nach der Art eines Kurvengelenks in der Gelenkpfanne aufgenommen, derart, dass eine Sperrkörperträger-Schwenkachse in Bezug auf das zweite Drehglied nicht notwendigerweise fest ist. Der verbleibende Freiheitsgrad kann dazu verwendet werden, um unterschiedliche Funktionen der Kupplungsanordnung zu realisieren.

Das Zusammenwirken zwischen dem Sperrkörperträgerkopf und der Gelenkpfanne des zweiten Gliedes ist jedoch vorzugsweise so, dass unabhängig von der relativen Schwenkstellung des Sperrkörperträgers in Bezug auf das zweite Glied immer eine Kraft in Antriebsrichtung von dem zweiten Glied auf den Sperrkörperträger übertragbar ist.

Insgesamt ist es ferner vorteilhaft, wenn der Sperrkörperträger an einem zweiten Ende eine Sperrkörperträgerpfanne aufweist, der ein Sperrkörpergliedkopf des Sperrkörpergliedes zugeordnet ist, um ein zweites Verschwenklager zwischen dem Sperrkörperträger und dem Sperrkörperglied zu bilden.

Auch das Zusammenwirken zwischen der Sperrkörperträgerpfanne und dem Sperrkörpergliedkopf ist so, dass ein Kurvengelenk eingerichtet ist. Vorzugsweise kann jedoch unabhängig von der relativen Schwenkstellung des Sperrkörpergliedes in Bezug auf den Sperrkörperträger eine Kraft in Antriebsrichtung übertragen werden.

Es ist hierbei von besonderem Vorteil, wenn der Sperrkörperträger wenigstens eine Haltenase aufweist, die den Sperrkörpergliedkopf übergreift, um das Sperrkörperglied in Antriebsrichtung in Bezug auf den Sperrkörperträger zu halten. Die Haltenase kann andererseits auch dazu dienen, den Sperrkörperträger in Bezug auf das Sperrkörperglied zu halten, wenn das erste Glied mit der Kupplungsverzahnung das zweite Glied antreibt.

Vorzugsweise weist der Sperrkörperträger zwei in Richtung quer zur Antriebsrichtung gegenüberliegende Haltenasen auf, die den Sperrkörpergliedkopf von entgegengesetzten Seiten übergreifen, um das Sperrkörperglied in Antriebsrichtung in Bezug auf den Sperrkörperträger zu halten.

Sofern das Sperrkörperglied an dem Sperrkörperträger in eine Neutralposition vorgespannt ist, wird dabei der Sperrkörpergliedkopf vorzugsweise gegen die Haltenasen vorgespannt, so dass eine Neutralposition des Sperrkörpergliedes in Bezug auf den Sperrkörperträger eingerichtet wird.

Gemäß einer weiteren bevorzugten Ausführungsform ist der Mitnahmeabschnitt so ausgebildet, dass die Sperrkörperanordnung, bei Übertragung einer Antriebskraft von dem zweiten Glied auf das erste Glied und dann, wenn sich die Sperrkörperanordnung in der Kupplungsposition befindet, in die Kupplungsverzahnung hineingedrückt wird.

Vorzugsweise nimmt dabei ein Sperrkörperglied der Sperrkörperanordnung in der Kupplungsposition eine solche Relativlage zu dem Sperrkörperträger und/oder zu einer Verzahnung bzw. einer Zahnflanke der Kupplungsverzahnung ein, so dass die Sperrkörperanordnung mit dem Sperrkörperglied aufgrund der Antriebskraft, insbesondere einer Umfangskraft, in die Kupplungsverzahnung hineingedrückt wird, nach der Art einer negativen Hinterlegung einer Synchron-Schaltkupplungsverzahnung von Kraftfahrzeuggetrieben.

Durch diese Maßnahme kann gewährleistet werden, dass das Sperrkörperglied unabhängig von einer Vorspannung des Sperrkörpergliedes an einem Sperrkörperträger immer in der Kupplungsposition verbleibt, solange über die Sperrkörperanordnung eine Antriebskraft von dem zweiten Glied auf das erste Glied übertragen wird.

Gemäß einer weiteren bevorzugten Ausführungsform ist der Mitnahmeabschnitt so ausgebildet, dass die Sperrkörperanordnung, bei Übertragung einer Antriebskraft von dem zweiten Glied auf das erste Glied und dann, wenn die Sperrkörperanordnung in Richtung der Freigabeposition aus der Kupplungsposition heraus verschwenkt ist, aus der Kupplungsverzahnung herausgedrückt wird.

Sobald folglich die Sperrkörperanordnung die Kupplungsposition verlassen hat, und zwar vorzugsweise unmittelbar danach, kehrt sich vorzugsweise die Relativlage zwischen Mitnahmeabschnitt und Kupplungsverzahnung derart um, dass der Mitnahmeabschnitt nicht mehr in die Kupplungsverzahnung hineingedrückt wird, sondern aus dieser herausgedrückt wird.

Hierdurch wird ein Verschwenken der Sperrkörperanordnung aus der Kupplungsposition in die Freigabeposition unterstützt.

Mit anderen Worten wird in der Übergangsposition die Antriebskraft aufgrund der relativen Geometrie von Mitnahmeabschnitt und Kupplungsverzahnung, nach der Art einer positiven Hinterlegung, dazu genutzt, um den Mitnahmeabschnitt aus der Kupplungsverzahnung herauszudrücken, sobald die Sperrkörperanordnung die Kupplungsposition verlassen hat.

Bei einer zweigliedrigen Sperrkörperanordnung wird folglich, sobald die Sperrkörperanordnung nicht mehr mittels eines Abstützgliedes abgestützt ist und folglich aufgrund der Antriebskraft zusammengedrückt wird (so dass vorzugsweise sich ein Winkel zwischen einer Sperrkörperträgerachse und einer Sperrkörpergliedachse verringert oder ein Gegenwinkel vergrößert), das Sperrkörperglied gegen einen Anschlag an dem Sperrkörperträger verschwenkt. Es nimmt dann in Bezug auf die Kupplungsverzahnung eine solche Lage ein, dass das Sperrkörperglied - und aufgrund des Anschlages die Sperrkörperanordnung insgesamt - durch die Antriebskraft, vorzugsweise einer Umfangskraft, aus der Kupplungsverzahnung herausgedrückt und folglich das Auslegen einer zugeordneten Gangstufe unterstützt.

Gemäß einer weiteren bevorzugten Ausführungsform wird der Sperrkörperträger in einer Sperrkörperträger-Freigabeposition mittels einer elastischen Federeinrichtung gehalten.

Die elastische Federeinrichtung greift dabei vorzugsweise an einer Gelenkpfanne des zweiten Drehgliedes an, die von der Kontur her so ausgelegt ist, dass der Sperrkörperträger mittels der elastischen Federeinrichtung in seiner Freigabeposition gehalten wird. Beispielsweise kann der Sperrkörperträger in seiner Freigabeposition sein, wenn ein Abstützglied sich in einer Entkupplungsposition befindet. Sobald das Abstützglied in eine Abstützposition verschwenkt wird, wird hierdurch vorzugsweise der Sperrkörperträger gegen die Wirkung der elastischen Federeinrichtung aus der Freigabeposition in Richtung der Kupplungsposition verschwenkt.

Dabei ist es von besonderem Vorzug, wenn die elastische Federeinrichtung eine Druckfeder aufweist, die zwischen einem Zapfen, der an dem zweiten Glied anliegt, und dem Sperrkörperglied wirkt.

Diese Druckfederanordnung kann dabei eine Druckfeder, zwei Druckfedern oder mehrere Druckfedern aufweisen, die parallel wirken. Die Druckfederanordnung kann dabei zum einen die Wirkung haben, den Sperrkörperträger in seine Freigabeposition elastisch vorzuspannen. Zum anderen kann die Druckfederanordnung die Wirkung haben, ein Sperrglied, das an dem Sperrkörperträger gelagert ist, in eine Neutralposition vorzuspannen, aus der das Sperrkörperglied gegenüber dem Sperrkörperträger in zwei entgegengesetzte Richtungen verschwenkbar ist.

Gemäß einer weiteren insgesamt bevorzugten Ausführungsform beinhaltet die Kupplungsanordnung eine Nockenwelle, die einen Entkupplungsumfangsabschnitt und einen Kupplungs- bzw. Abstützumfangsabschnitt aufweist, wobei die Sperrkörperanordnung einen Nockenfolgerabschnitt aufweist, der in der Freigabeposition an dem Entkupplungsumfangsabschnitt angreift und der in der Kupplungsposition an dem Abstützumfangsabschnitt angreift.

Vorzugsweise greift der Nockenfolgerabschnitt dabei an einem Sperrkörperträger der Sperrkörperanordnung an.

Wie eingangs erläutert, ist es bevorzugt, wenn die Sperrkörperanordnung so ausgebildet ist, dass sie eine Kraft in Antriebsrichtung übertragen kann, wobei die Sperrkörperanordnung vorzugsweise zweigliedrig ist, derart, dass die Kraftübertragung sich über ein Abstützglied abstützen muss. Das Abstützglied kann in diesem Fall gebildet sein durch den Abstützumfangsabschnitt der Nockenwelle. Der Abstützumfangsabschnitt weist dabei vorzugsweise einen größeren Außendurchmesser auf als der Entkupplungsumfangsabschnitt. Der Abstützumfangsabschnitt und der Entkupplungsumfangsabschnitt können so aneinander angrenzen, dass bei einer Relativverdrehung der Nockenwelle gegenüber dem zweiten Glied, das vorliegend als Drehglied ausgebildet ist, vorzugsweise als Hohlwelle, der Übergang von Entkupplungsumfangsabschnitt zu Abstützumfangsabschnitt den Sperrkörperträger der Sperrkörperanordnung aus seiner Freigabeposition in eine Kupplungsposition verschwenken kann, und zwar vorzugsweise gegen die Wirkung einer elastischen Federeinrichtung.

Andererseits wird, sobald der Nockenfolgerabschnitt nicht mehr an dem Abstützumfangsabschnitt angreift, ein Verschwenken des Sperrkörperträgers in die Freigabeposition zugelassen, was insbesondere aufgrund einer Antriebskraft zwischen erstem und zweitem Glied in Umfangsrichtung erfolgt, die dazu führt, dass die vorzugsweise zweigliedrige Sperrkörperanordnung "kollabiert", wobei der Winkel zwischen Sperrkörperträger und Sperrkörperglied sich verkleinert.

Von besonderem Vorzug ist es dabei, wenn die Nockenwelle im Bereich des Entkupplungsumfangsabschnitts einen Nockenwellen-Außendurchmesser aufweist, wobei das zweite Glied einen Drehglied-Außendurchmesser aufweist, wobei das Verhältnis von Nockenwellen-Außendurchmesser zu Drehglied-Außendurchmesser in einem Bereich von 0,15 bis 0,5 liegt, insbesondere kleiner ist als 0,4 und vorzugsweise kleiner ist als 0,35.

Die Nockenwelle ist vom Außendurchmesser her daher relativ klein in Bezug auf den Außendurchmesser des zweiten Gliedes, das vorliegend vorzugsweise als Drehglied ausgebildet ist, insbesondere als Hohlwelle, innerhalb der die Nockenwelle angeordnet ist.

Ein Verhältnis eines Außendurchmessers des Abstützumfangsabschnitts zu dem Drehglied-Außendurchmesser liegt vorzugsweise in einem Bereich von kleiner 0,7, vorzugsweise kleiner 0,6 und insbesondere kleiner 0,5.

Auch dieses Verhältnis kann dazu beitragen, dass die Kraft zwischen dem Sperrkörperträger und dem Abstützglied bzw. dem Abstützumfangsabschnitt relativ gering ist, selbst dann, wenn über die Sperrkörperanordnung eine hohe Kraft in Antriebsrichtung übertragen wird.

Besonders bevorzugt ist es ferner, wenn sich der Sperrkörperträger mit einem Nockenfolgerabschnitt an dem Abstützumfangsabschnitt der Nockenwelle abstützt, wobei der Nockenfolgerabschnitt in Umfangsrichtung von einer Sperrkörperträger-Schwenkachse um wenigstens 45° beabstandet ist, vorzugsweise wenigstens 60°. Alternativ bzw. zusätzlich ist es bevorzugt, wenn der Nockenfolgerabschnitt in Umfangsrichtung zwischen einer Sperrkörperträger-Schwenkachse und einer Sperrkörperglied-Schwenkachse liegt, vorzugsweise jedoch von einer Sperrkörperglied-Schwenkachse in Richtung eines Eingriffspunktes an der Kupplungsverzahnung und darüber hinaus beabstandet ist, also in Umfangsrichtung weiter von der Sperrkörperträger-Schwenkachse beabstandet ist als der Eingriffspunkt in der Kupplungsverzahnung von der Sperrkörperträger-Schwenkachse beabstandet ist.

In der erfindungsgemäßen Getriebeeinheit ist vorzugsweise vorgesehen, dass an der Getriebewelle eine Mehrzahl von Sperrkörperanordnungen der oben beschriebenen Art angeordnet sind, entsprechend der Anzahl der an der Getriebewelle gelagerten Zahnräder, die als Losräder ausgebildet sind und jeweils eine Kupplungsverzahnung an ihrem Innenumfang haben.

Die Sperrkörperanordnungen an der Getriebewelle sind dabei vorzugsweise axial versetzt, entsprechend der Anordnung der Losräder, und sind vorzugsweise auch in Umfangsrichtung versetzt angeordnet, um die Ausnehmungen in der Getriebewelle zur Aufnahme der Sperrkörperanordnungen gleichmäßig zu verteilen, so dass die Getriebewelle insgesamt gleichmäßig aufgrund der Ausnehmungen geschwächt wird und nicht lokal.

Die Getriebewelle wird vorzugsweise durch Muskelkraft angetrieben. Generell versteht sich vorliegend, dass ein durch Muskelkraft angetriebenes Fahrzeug auch ein E-Bike sein kann, bei dem die Muskelkraft durch Antriebskraft eines Elektromotors unterstützt wird.

Ein Schalten der Gangstufen erfolgt durch relatives Verdrehen der Nockenwelle in Bezug auf die Getriebewelle. Die Nockenwelle ist so ausgebildet, dass sie für jede Sperrkörperanordnung einen axial versetzt angeordneten Abstützumfangsabschnitt aufweist, so dass bei jeder relativer Drehlage eine der Sperrkörperanordnungen aus der Freigabeposition in die Kupplungsposition versetzt wird, um das zugeordnete Losrad drehfest mit der Getriebewelle in Antriebsrichtung zu verbinden.

Bei einem Gangwechsel wird die Nockenwelle verdreht, derart, dass der Abstützumfangsabschnitt eines anderen Losrades (für die Ziel-Gangstufe) den zugeordneten Nockenfolgerabschnitt der Sperrkörperanordnung des Ziel-Losrades aus der Freigabeposition in die Kupplungsposition versetzt.

Bei einem Hochschalten in eine höhere und/oder Herunterschalten in eine niedrigere Ziel-Gangstufe bleibt jedoch aufgrund der nach wie vor bestehenden Umfangskraft (es soll ja unter Last geschaltet werden, also ohne Einbruch der Zugkraft), die Sperrkörperanordnung der Quell-Gangstufe (also jene Gangstufe, die ausgelegt werden soll) in Eingriff. Das Auslegen dieser Quell-Gangstufe erfolgt dann einfach dadurch, dass der Abstützumfangsabschnitt der Nockenwelle, der der Quell-Gangstufe bzw. dem Quell-Losrad zugeordnet ist, so verdreht wird, dass er den Nockenfolgerabschnitt der Sperrkörperanordnung des Quell-Losrades nicht mehr abstützt. Da nach wie vor die Umfangskraft in Antriebsrichtung wirkt, führt dies zu einem automatischen Auslegen der Quell-Gangstufe, da aufgrund der Umfangskraft die zweigliedrige Sperrkörperanordnung "kollabiert", indem die Sperrkörperglied-Schwenkachse aufgrund des Zusammendrückens von Mitnahmeabschnitt einerseits und Sperrkörperträgerkopf andererseits nach radial innen ausgelenkt wird, und zwar aufgrund der fehlenden Abstützung. Dabei unterstützt ab diesem Zeitpunkt vorzugsweise die Anpassung von Mitnahmeabschnitt und Kupplungsverzahnung das Herausdrücken des Sperrkörpergliedes aus der Kupplungsverzahnung, derart, dass die drehfeste Verbindung zwischen der Getriebewelle und dem Losrad der Quell-Gangstufe aufgehoben wird und anschließend die nach wie vor auf die Getriebewelle ausgeübte Umfangskraft auf die Kupplungsverzahnung des Losrades umgelenkt wird, das der Ziel-Gangstufe zugeordnet ist.

Die erfindungsgemäße Kupplungsanordnung ist folglich in einer erfindungsgemäßen Getriebeeinheit mehrfach realisiert. Die Kupplungsanordnung ermöglicht ein Schalten der Getriebeeinheit unter Last, und zwar insbesondere bei einem Herunterschaltvorgang.

Bei einem Herunterschaltvorgang hat das Ziel-Zahnrad bezogen auf die Welle eine geringere Drehzahl (Freilauf). Das Quell-Zahnrad mit der höheren Drehzahl bleibt in Eingriff. Eine dem Quell-Zahnrad zugeordnete Klinke im Stand der Technik würde sich dann aufgrund dessen nicht lösen lassen. Mit der erfindungsgemäßen Kupplungsanordnung lässt sich der Eingriff zwischen dem Quell-Zahnrad und der zugeordneten Welle jedoch lösen.

Bei einem Hochschaltvorgang ist es umgekehrt. Das Ziel-Zahnrad hat eine höhere Drehzahl als die Welle und geht bei einem Ausschwenken der Sperrkörperanordnung direkt in den Eingriff. Das Quell-Zahnrad geht dann sofort in den Freilauf über, und die dem Quell-Zahnrad zugeordnete Sperrkörperanordnung wird entlastet und kann folglich auch im Stand der Technik vergleichsweise einfach gelöst werden.

Ausführungsbeispiele der Erfindung sind in der Zeichnung dargestellt und werden in der nachfolgenden Beschreibung näher erläutert. Es zeigen:
Fig. 1 in schematischer Form eine Getriebeeinheit, die in einen Fahrradrahmen eines Fahrzeuges integriert ist, wobei die Getriebeeinheit ein Mehrgang-Getriebe bildet;
Fig. 2 einen schematischen Schaltplan eines Mehrgang-Getriebes mit zwei Teilgetrieben und einer gemeinsamen Vorgelegewelle, wie es in einer Getriebeeinheit der Fig. 1 verwendbar ist;
Fig. 3 einen schematischen Schaltplan einer Schaltanordnung zum Schalten von Gangstufen einer Getriebeeinheit, und zwar mit einer ersten Nockenwelle für ein erstes Teilgetriebe und einer weiteren Nockenwelle für ein zweites Teilgetriebe sowie jeweiligen Überlagerungsgetrieben;
Fig. 4 eine perspektivische Darstellung einer Getriebewelle für eine Getriebeeinheit, mit einer Mehrzahl von daran angeordneten Sperrkörperanordnungen, die jeweils einem drehbar an der Getriebewelle gelagerten Losrad zugeordnet sind, von denen in Fig. 4 eines dargestellt ist;
Fig. 5 eine schematische Schnittansicht entlang einer Linie V-V der Fig. 4 mit einer Darstellung einer Getriebewelle in Form einer Vorgelegewelle, einer konzentrisch darin angeordneten Nockenwelle und mit einem außen an der Getriebewelle gelagerten Losrad, das mittels einer Kupplungsanordnung in Antriebsrichtung mit der Getriebewelle verbindbar ist, wobei die Kupplungsanordnung eine Sperrkörperanordnung aufweist, die sich in Fig. 5 in einer Freigabeposition befindet;
Fig. 6 eine Explosionsdarstellung der Sperrkörperanordnung der Fig. 5;
Fig. 7 eine der Fig. 5 vergleichbare Darstellung der Kupplungsanordnung und der Sperrkörperanordnung in einer Kupplungsposition;
Fig. 8 eine schematische Darstellung der Sperrkörperanordnung zur Darstellung der auftretenden Kräfte, wobei die Sperrkörperanordnung in einer Übergangsposition gezeigt ist, bei dem die Sperrkörperanordnung aus der in Fig. 7 gezeigten Kupplungsposition aufgrund einer Verdrehung einer Nockenwelle in eine Freigabeposition übergeht;
Fig. 9 eine der Fig. 7 vergleichbare Darstellung der Kupplungsanordnung in der Kupplungsposition in vergrößerter Darstellung;
Fig. 10eine der Fig. 9 vergleichbare Darstellung der Sperrkörperanordnung in der Übergangsposition, und zwar kurz nach einem Übergang der Sperrkörperanordnung aus der Kupplungsposition in Richtung der Freigabeposition;
Fig. 11 eine der Fig. 9 vergleichbare Darstellung, bei der sich die Sperrkörperanordnung in einer Freilaufposition befindet;
Fig. 12 eine schematische Schnittansicht zur Darstellung der Kraftwirkung der Federanordnung der Fig. 6;
Fig. 13-16 die Kupplungsanordnungen einer Quell-Gangstufe und einer Ziel-Gangstufe bei einem Herunterschaltvorgang;
Fig. 17eine Explosionsdarstellung der Vorgelegewelle der Fig. 4 zusammen mit einer Nockenwelle;
Fig. 18 die N ockenwelle der Fig. 17 in einer Explosionsdarstellung;
Fig. 19eine Mitnehmeranordnung der Nockenwelle der Fig. 18 in einer ersten Position;
Fig. 20 die Mitnehmeranordnung der Fig. 19 in einer zweiten Position;
Fig. 21 die Mitnehmeranordnung der Fig. 19 in einer dritten Position;
Fig. 22 eine schematische Darstellung einer gehäusefesten Getriebenabe, an der ein Sonnenrad eines Planetenradsatzes verdrehbar gelagert ist;
Fig. 23eine der Fig. 18 vergleichbare Darstellung einer Nockenwelle mit einer alternativen Ausführungsform einer Mitnehmeranordnung;
Fig. 24 die Mitnehmeranordnung der Fig. 23 in einer geöffneten Position; und
Fig. 25 die Mitnehmeranordnung der Fig. 23 in einer geschlossenen Position.

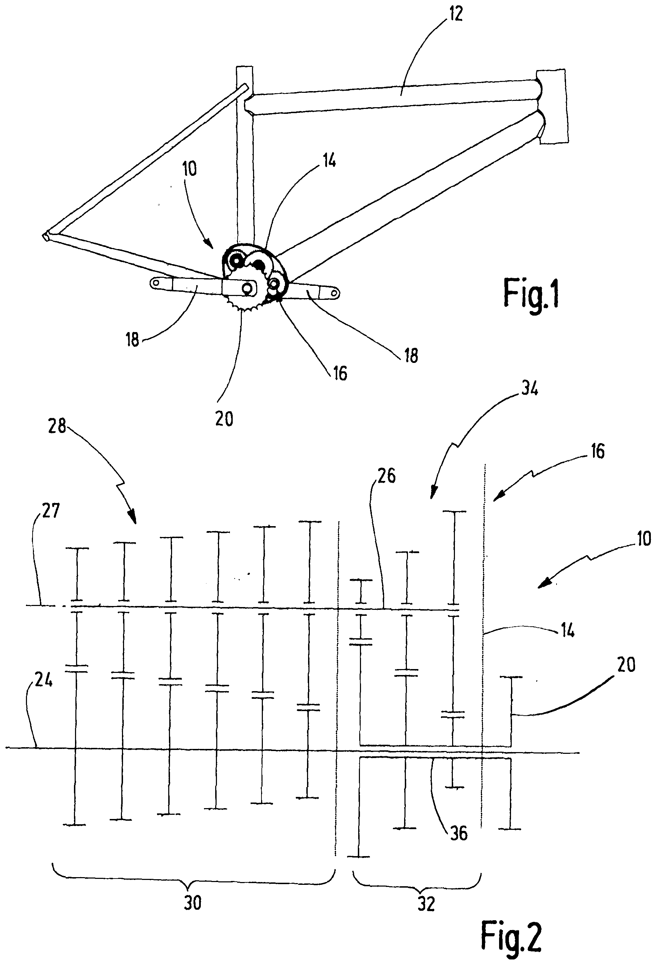

In Fig. 1 ist eine Getriebeeinheit allgemein mit 10 bezeichnet.

Fig. 1 zeigt eine Seitenansicht eines Fahrradrahmens 12, der ein Getriebegehäuse 14 aufweist, in dem die Getriebeeinheit 10 aufgenommen ist. Die Getriebeeinheit 10 ist in dieser Darstellung nur schematisch angedeutet und ist als kompakte Einheit ausgebildet, die vorzugsweise in einem hier nicht dargestellten Getriebekäfig angeordnet ist. Die Getriebeeinheit 10 wird hierin beispielhaft für den Einsatz bei einem Fahrrad beschrieben, wobei allerdings auch der Einsatz bei anderen mit Muskelkraft betriebenen Fahrzeugen möglich ist. Ferner ist es auch denkbar, die Getriebeeinheit 10 für Fahrzeuge zu verwenden, bei denen Muskelkraft in Kombination mit einer Antriebsmaschine zum Antreiben des Fahrzeugs verwendet wird, wie beispielsweise einer elektrischen Maschine, die zur elektromotorischen Unterstützung eingesetzt wird. Auch ist es denkbar, die Getriebeeinheit für Fahrzeuge zu verwenden, die rein elektromotorisch angetrieben sind, oder auch verbrennungsmotorisch.

Die Getriebeeinheit 10 und das Getriebegehäuse 14 bilden zusammen mit Kurbeln 18 ein Mehrgang-Getriebe 16, wobei eine Getriebeeingangswelle koaxial zu einem Antriebsritzel 20 angeordnet ist. Das Antriebsritzel 20 dient beispielsweise zum Antreiben eines Zugmittels wie einer Kette oder eines Zahnriemens, der ferner mit einem Hinterradritzel verbunden ist, um auf diese Weise Antriebsleistung, die über die Tretkurbeln 18 eingebracht wird, über das Mehrgang-Getriebe 16 unter- bzw. übersetzt auf das Hinterrad zu übertragen, um auf diese Weise das Fahrzeug anzutreiben.

In Fig. 2 ist in schematischer Form ein Schaltplan einer Getriebeeinheit 10 gezeigt, die ein Mehrgang-Getriebe 16 beinhaltet.

Die Getriebeeinheit 10 weist eine Eingangswelle 24 auf, die mit den Kurbeln 18 drehfest verbindbar ist und folglich als Kurbelwelle ausgebildet ist. Ferner weist die Getriebeeinheit 10 eine parallel versetzt zu der Eingangswelle 24 angeordnete Vorgelegewelle 26 auf, die im vorliegenden Zusammenhang ein zweites Drehglied bildet. Die Vorgelegewelle 26 ist konzentrisch zu einer Drehachse 27 ausgerichtet.

Die Getriebeeinheit 10 weist eine Mehrzahl von ersten Radsätzen 28 auf, die einer ersten Getriebegruppe 30 zugeordnet sind. Die ersten Radsätze 28 weisen jeweils ein Festrad auf, das drehfest mit der Eingangswelle 24 verbunden ist, sowie ein Losrad, das drehbar an der Vorgelegewelle 26 gelagert ist.

Die Getriebeeinheit 10 beinhaltet ferner eine zweite Getriebegruppe 32, die eine Mehrzahl von zweiten Radsätzen 34 aufweist. Die zweiten Radsätze 34 weisen jeweils ein Losrad auf, das drehbar an der Vorgelegewelle 26 gelagert ist, sowie ein Festrad, das drehfest mit einer Hohlwelle 36 verbunden ist, die konzentrisch zu der Eingangswelle 24 angeordnet ist und die eine Ausgangswelle der Getriebeeinheit 10 bildet. Das Antriebsritzel 20 ist drehfest mit der Hohlwelle 36 verbunden.

Die Eingangswelle 24 ist als axiale Durchgangswelle ausgebildet. Das Antriebsritzel 20 bildet ein Ausgangsglied der Getriebeeinheit 10. Die Vorgelegewelle 26 bildet für die erste Getriebegruppe 30 eine Ausgangswelle und für die zweite Getriebegruppe 32 eine Eingangswelle.

Vorliegend ist die Anzahl der ersten Radsätze 28 gleich sechs. Die Anzahl der zweiten Radsätze 34 ist gleich drei.

Die zwei Getriebegruppen 30, 32 sind in Leistungsflussrichtung hintereinander angeordnet, derart, dass mittels der Getriebeeinheit 10 ein Mehrgang-Getriebe 16 mit insgesamt achtzehn Gangstufen (sechs mal drei) gebildet ist. Die Übersetzungen der einzelnen Radsätze 28, 34 können so gewählt werden, dass die achtzehn Gangstufen von einer niedrigen Gangstufe 1 bis zu einer höchsten Gangstufe 18 konstant abgestuft sein können, beispielsweise mit einer Gesamtübersetzung bzw. Spreizung von 636 Prozent bei einer konstanten Abstufung von 11,5 Prozent.

In einer alternativen Ausführungsform kann die erste Getriebegruppe 30 fünf Radsätze aufweisen, und die zweite Getriebegruppe 32 vier Radsätze, so dass insgesamt zwanzig Gangstufen mit einer noch höheren Spreizung realisierbar sind.

Generell ist bei beiden Varianten denkbar, dass mittels einer nicht näher dargestellten Schaltvorrichtung die Eingangswelle 24 direkt mit der Ausgangswelle 36 verbunden wird, um einen zusätzlichen Direktgang einzurichten.

Zum Einrichten einer Gangstufe sind dadurch, dass das Mehrgang-Getriebe 16 durch zwei Getriebegruppen 30, 32 gebildet ist, jeweils zwei Losräder mit der Vorgelegewelle 26 zu verbinden, und zwar ein Losrad der ersten Getriebegruppe 30 und ein Losrad der zweiten Getriebegruppe 32.

Zum drehfesten Verbinden der Losräder mit der Vorgelegewelle 26 dient eine in Fig. 2 nicht näher dargestellte Schaltvorrichtung, die für jedes Losrad eine Kupplungsanordnung beinhaltet. Generell ist vorgesehen, dass die Losräder jeweils eine radial innere Kupplungsverzahnung aufweisen. Ferner ist vorgesehen, dass an der Vorgelegewelle 26 für jedes Losrad eine Sperrkörperanordnung gelagert ist. Jede Sperrkörperanordnung ist zwischen einer Kupplungsposition zum Verbinden der Vorgelegewelle mit dem jeweiligen Losrad in einer Antriebsdrehrichtung und einer Freigabeposition verschwenkbar, bei der die Sperrkörperanordnung nicht in die zugeordnete Kupplungsverzahnung greift, das zugeordnete Losrad also in Antriebsrichtung nicht drehfest mit der Vorgelegewelle 26 verbunden ist.

Vorliegend ist vorgesehen, dass die Sperrkörperanordnung dabei einen Sperrkörperträger aufweist, der verschwenkbar an der Vorgelegewelle 26 gelagert ist, und ein Sperrkörperglied aufweist, das an dem Sperrkörperträger verschwenkbar gelagert ist und an dem ein Mitnahmeabschnitt ausgebildet ist, der in der Kupplungsposition in die Kupplungsverzahnung des zugeordneten Losrades greift und der in der Freigabeposition nicht in die Kupplungsverzahnung greift.

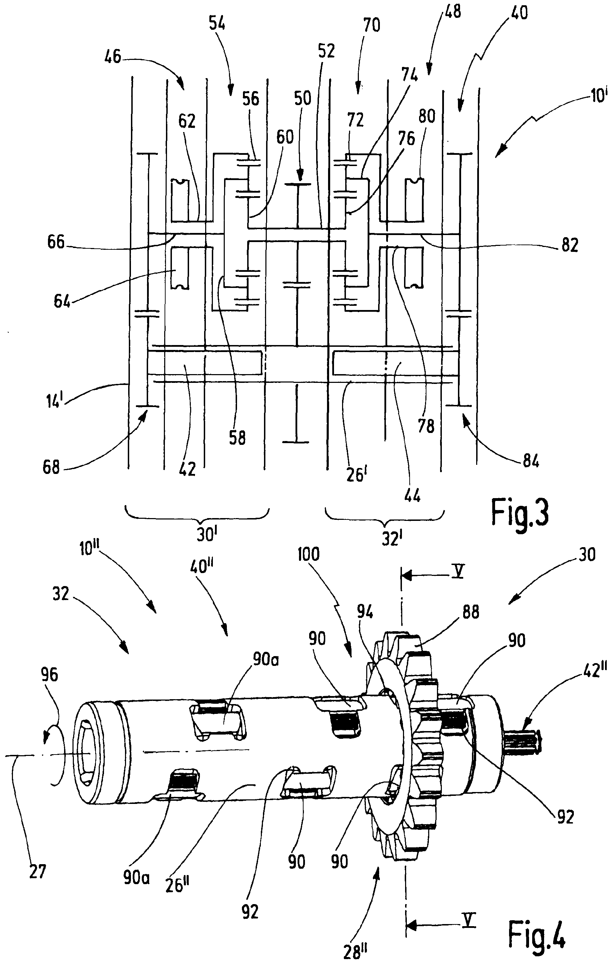

In Fig. 3 ist in schematischer Form eine Getriebeeinheit 10' gezeigt, die der Getriebeeinheit der oben beschriebenen Art hinsichtlich Aufbau und Funktionsweise entsprechen kann und die mittels einer Schaltvorrichtung 40 schaltbar ist. Gleiche Elemente wie bei den Fig. 1 und 2 sind mit entsprechenden Bezugsziffern versehen.

Die Schaltvorrichtung 40 weist koaxial zu einer Vorgelegewelle 26' eine erste Nockenwelle 42 und eine zweite Nockenwelle 44 auf. Die Vorgelegewelle 26' ist als Hohlwelle ausgebildet. Die Nockenwellen 42, 44 sind koaxial hierzu darin angeordnet. Die erste Nockenwelle 42 ist einer ersten Getriebegruppe 30' zugeordnet. Die zweite Nockenwelle 44 ist einer zweiten Getriebegruppe 32' zugeordnet.

Das Schalten von Gängen der Getriebeeinheit 10' erfolgt generell folgendermaßen. Die Nockenwellen 42, 44 werden jeweils mit einer Drehzahl angetrieben, die im Regelfall identisch ist zu jener der Vorgelegewelle 26'. Zum Ein- und Auslegen von Gängen wird die jeweilige Nockenwelle 42, 44 relativ zu der Vorgelegewelle 26' verdreht, wodurch eine jeweilige Kupplungsanordnung einer Ziel-Gangstufe in eine Kupplungsposition gelangt, wohingegen Kupplungsanordnungen von anderen Radsätzen in eine Freigabeposition gelangen, derart, dass jeweils nur ein Losrad einer Getriebegruppe drehfest in Antriebsrichtung mit der Vorgelegewelle 26' verbunden ist.

Zum Einrichten einer Drehzahlgleichheit zwischen den jeweiligen Nockenwellen 42, 44 und der Vorgelegewelle 26' dienen ein erstes Überlagerungsgetriebe 46 und ein zweites Überlagerungsgetriebe 48.

Das erste und das zweite Überlagerungsgetriebe 46, 48 teilen sich einen gemeinsamen Nebenwellenradsatz 50, der ein mit der Vorgelegewelle 26' verbundenes Festrad und ein mit einer parallel versetzt hierzu angeordnete Nebenwelle 52 verbundenes weiteres Festrad beinhaltet. Die Nebenwelle 52 dreht also immer mit einer Drehzahl, die proportional ist zu jener der Vorgelegewelle 26'.

Das erste Überlagerungsgetriebe 46 weist einen ersten Planetenradsatz 54 auf, der ein erstes Hohlrad 56, einen ersten Planetenträger 58 und ein erstes Sonnenrad 60 beinhaltet. Das erste Sonnenrad 60 ist drehfest mit der Nebenwelle 52 verbunden. Das erste Hohlrad 56 ist drehfest mit einer ersten Schaltwelle 62 verbunden, die konzentrisch zu der Nebenwelle 52 in Form einer Hohlwelle ausgebildet ist. An der ersten Schaltwelle 62 ist eine erste Zugscheibe 64 festgelegt. Die erste Schaltwelle 62 ist an einer ersten Überlagerungswelle 66 verdrehbar gelagert. Die erste Überlagerungswelle 66 ist einerseits drehfest mit dem ersten Planetenträger 58 verbunden. Zum anderen ist die erste Überlagerungswelle 66 des ersten Überlagerungsgetriebes 46 über einen ersten Überlagerungsradsatz 68 mit der ersten Nockenwelle 42 verbunden.

Der Nebenwellenradsatz 60 ist im Wesentlichen mittig in Bezug auf die Längserstreckung der Getriebeeinheit 10' angeordnet. Der erste Überlagerungsradsatz 68 ist an einem ersten axialen Ende der Getriebeeinheit 10' angeordnet. Die erste Nockenwelle 42 erstreckt sich von dem ersten axialen Ende in axialer Richtung in die Vorgelegewelle 26' hinein. In axialer Richtung zwischen dem Nebenwellenradsatz 50 und dem ersten Überlagerungsradsatz 68 sind der erste Planetenradsatz 54 sowie die erste Schaltwelle 62 mit der ersten Zugscheibe 64 angeordnet.

Das zweite Überlagerungsgetriebe 48 ist im Wesentlichen spiegelbildlich zu dem ersten Überlagerungsgetriebe 46 ausgebildet und beinhaltet einen zweiten Planetenradsatz 70. Der zweite Planetenradsatz 70 weist ein zweites Hohlrad 72, einen zweiten Planetenträger 74 und ein zweites Sonnenrad 76 auf. Das zweite Sonnenrad 76 ist drehfest mit der Nebenwelle 52 verbunden.

Das zweite Hohlrad 72 ist drehfest mit einer zweiten Schaltwelle 78 verbunden, an der eine zweite Zugscheibe 80 festgelegt ist. Die zweite Schaltwelle 78 ist verdrehbar in Bezug auf eine zweite Überlagerungswelle 82 gelagert, die drehfest mit dem zweiten Planetenträger 74 verbunden ist. Die zweite Überlagerungswelle 82 ist mittels eines zweiten Überlagerungsradsatzes mit der zweiten Nockenwelle 44 verbunden. Der zweite Überlagerungsradsatz 84 ist am gegenüberliegenden zweiten axialen Ende der Getriebeeinheit 10' angeordnet. Die zweite Nockenwelle 44 erstreckt sich von diesem gegenüberliegenden axialen Ende in axialer Richtung in die Vorgelegewelle 26' hinein.

Die Zugscheiben 64, 80 sind mit jeweiligen Betätigungshebeln verbunden, die beispielsweise am Lenker eines Fahrrades angeordnet sind. Die Verbindung kann über Bowdenzüge oder dgl. erfolgen.

Die Zugscheiben 64, 80 werden bei eingelegter Gangstufe jeweils festgehalten, derart, dass eine Drehung der Nebenwelle 52, die proportional ist zu der Drehung der Vorgelegewelle 26', in eine Drehung der jeweiligen Überlagerungswelle 66, 82 übersetzt wird, und zwar proportional hierzu, deren Drehung wiederum proportional über die jeweiligen Konstanten-Radsätze 68, 84 in eine Drehung der jeweiligen Nockenwelle 42, 44 umgesetzt ist, die jeweils identisch ist zu der Drehzahl der Vorgelegewelle 26'. Sofern die eine und/oder die andere Zugscheibe 64, 80 verdreht wird, wird proportional hierzu die zugeordnete Nockenwelle 42, 44 relativ zu der Vorgelegewelle 26' verdreht. Dies führt dazu, dass nicht näher bezeichnete Kupplungsanordnungen, die den Radsätzen 28 bzw. 34 der Getriebegruppen 30', 32' zugeordnet sind, aus dem Leistungsfluss genommen oder in den Leistungsfluss geschaltet werden.

Die oben in Bezug auf Fig. 3 beschriebene Schaltvorrichtung 40 ist auch in dem Dokument EP 2 379 402 B2 im Detail beschrieben. Auf dessen Offenbarungsgehalt wird vorliegend vollumfänglich Bezug genommen. Eine weitere Schaltvorrichtung, bei der ein Überlagerungsgetriebe koaxial angeordnet ist, ist aus dem Dokument EP 2 512 909 A1 bekannt. Auch auf dessen Offenbarungsgehalt wird vorliegend vollumfänglich Bezug genommen.

Fig. 4 zeigt in schematischer Form einen Teil einer Getriebeeinheit 10", die hinsichtlich Aufbau und Funktionsweise den oben beschriebenen Getriebeeinheiten entsprechen kann, und zwar mit einer Schaltvorrichtung 40" anhand einer perspektivischen Ansicht einer Vorgelegewelle 26", an der ein beispielhaftes Losrad 88 drehbar gelagert ist. Das Losrad 88 kann beispielsweise Teil einer ersten Getriebegruppe 30 sein, also Teil eines Radsatzes der Radsätze 28. Aus Übersichtlichkeitsgründen sind weitere Radsätze der ersten Radsätze 28" in Fig. 4 nicht dargestellt. Ferner sind auch die zweiten Radsätze 34 der zweiten Getriebegruppe 32 nicht dargestellt. Man erkennt, dass sich die erste Nockenwelle 42" von einer Seite axial in die Vorgelegewelle 26" hinein erstreckt. Die andere, zweite Nockenwelle 44" ist in Fig. 4 aus Übersichtlichkeitsgründen nicht dargestellt.

An der Vorgelegewelle 26" ist eine Mehrzahl von vorliegend sechs Sperrkörperanordnungen 90 gelagert, die jeweils einem Losrad der ersten Getriebegruppe 30 zugeordnet sind und von denen in Fig. 4 vier dargestellt sind (die anderen liegen auf einer nicht gezeigten Rückseite). Die Sperrkörperanordnungen 90 der ersten Getriebegruppe 30 sind axial versetzt zueinander angeordnet und auf einer Seite der Vorgelegewelle 26" angeordnet. An der Vorgelegewelle 26" sind ferner eine Mehrzahl von Sperrkörperanordnungen 90a verschwenkbar gelagert, die Losrädern der zweiten Getriebegruppe 32 zugeordnet sind, im vorliegenden Fall drei Sperrkörperanordnungen 90a (von denen in Fig. 4 zwei gezeigt sind).

Mit einem derartigen Getriebe lässt sich also eine Mehrzahl von 6 x 3 = 18 Gangstufen realisieren. In der Praxis kann die Anzahl der an der Vorgelegewelle 26" angeordneten Sperrkörperanordnungen 90 und 90a jedoch auch niedriger oder höher liegen, so dass zwölf, sechzehn, achtzehn, zwanzig oder mehr Gangstufen realisierbar sind.

Die Sperrkörperanordnungen 90 sind jeweils in Radialausnehmungen 92 in der Vorgelegewelle 26" gelagert, wobei die Radialausnehmungen 92 in radialer Richtung als Durchgangsausnehmungen ausgebildet sind.

Die Sperrkörperanordnungen 90, 90a sind jeweils aus einer in Fig. 4 jeweils dargestellten Freigabeposition in eine Kupplungsposition verschwenkbar. In der Freigabeposition sind die Sperrkörperanordnungen 90, 90a jeweils radial innerhalb eines Außenumfanges der Vorgelegewelle 26" angeordnet, derart, dass ein der jeweiligen Sperrkörperanordnung 90, 90a zugeordnetes Losrad frei drehbar in Bezug auf die Vorgelegewelle 26" ist.

Sofern eine Sperrkörperanordnung 90 und/oder 90a in eine Kupplungsposition versetzt wird, wird die jeweilige Sperrkörperanordnung 90, 90a radial nach außen gegenüber dem Außenumfang der Vorgelegewelle 26" versetzt, derart, dass diese Sperrkörperanordnung 90, 90a in eine Kupplungsverzahnung 94 des zugeordneten Losrades 88 greift.

In Fig. 4 ist ferner eine gewöhnliche Antriebsdrehrichtung 96 gezeigt, in die die Vorgelegewelle 26" versetzt wird, wenn Antriebsleistung von der Eingangswelle 24 über einen Radsatz mit dem Losrad 88 auf die Vorgelegewelle übertragen wird, von der aus Antriebsleistung dann über ein nicht dargestelltes weiteres Losrad der zweiten Getriebegruppe hin zu einer Ausgangswelle 36 übertragen wird. Für das zweite Teilgetriebe 32 treibt also die Vorgelegewelle 26" ein nicht dargestelltes Losrad an, wohingegen für die erste Getriebegruppe das Losrad 88 die Vorgelegewelle 26" antreibt.

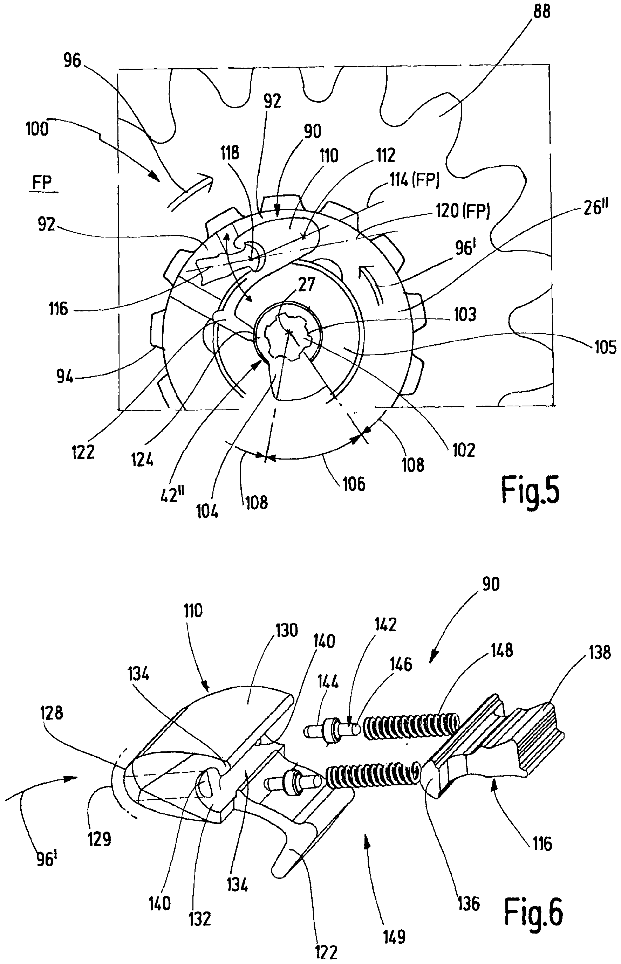

Jede Sperrkörperanordnung 90 bildet zusammen mit der Vorgelegewelle 26" bzw. deren zugeordneter Radialausnehmung 92 und der Kupplungsverzahnung 94 des zugeordneten Losrades 88 eine Kupplungsanordnung 100. Vorliegend sind für die Vorgelegewelle 26" neun Kupplungsanordnungen 100 vorgesehen, von denen eine im Wesentlichen vollständig dargestellt ist. Durch diese hindurch ist auch ein Querschnitt gelegt, der in Fig. 5 gezeigt ist.

Fig. 5 zeigt, dass das Losrad 88 eine axial ausgerichtete Kupplungsverzahnung 94 aufweist. Radial innerhalb der Kupplungsverzahnung 94 ist die Vorgelegewelle 26" angeordnet. Die Vorgelegewelle 26" ist als Hohlwelle ausgebildet. Radial innerhalb der Vorgelegewelle 26" ist vorliegend die erste Nockenwelle 42" zu sehen. Vorliegend ist gezeigt, dass die Vorgelegewelle 26" mittels des Losrades 88 in einer Antriebsrichtung 96 angetrieben wird. Genauso kann jedoch Antriebsleistung von der Vorgelegewelle 26" in der entgegengesetzten Richtung 96' auf das Losrad übertragen werden.

Die erste Nockenwelle 42" weist eine Nockenträgerwelle 102 auf, die mit einer axialen Außenverzahnung 103 versehen ist. Auf die Nockenträgerwelle 102 sind eine Nockenwellenlagerscheibe 105 und ein Nocken 104 aufgeschoben, der axial mit der Kupplungsanordnung 100 ausgerichtet ist. Der Nocken bzw. der Nockenkörper weist einen Entkupplungsumfangsabschnitt 108 auf, der sich über mehr als 300° erstreckt, sowie einen Abstützumfangsabschnitt 106. Der Abstützumfangsabschnitt 106 weist einen größeren Außendurchmesser auf als der Entkupplungsumfangsabschnitt 108. Die Nockenwellenlagerscheibe 105 stützt die Nockenträgerwelle 102 radial in der Vorgelegewelle 26" ab.

Die Sperrkörperanordnung 90 weist einen Sperrkörperträger 110 auf. Der Sperrkörperträger 110 ist in der Radialausnehmung 92 aufgenommen, und zwar derart, dass eine Drehung der Vorgelegewelle 26" in der Antriebsdrehrichtung 96' eine Umfangskraft auf den Sperrkörperträger 110 übertragen kann. Dabei ist der Sperrkörperträger 110 an der Vorgelegewelle 26" um eine Sperrkörperträger-Schwenkachse 112, die parallel verläuft zu der Drehachse 27, verschwenkbar gelagert. Der Sperrkörperträger 110 erstreckt sich von einem axialen Ende, bei dem der Sperrkörperträger 110 in einer Gelenkpfanne der Vorgelegewelle 26" (also einer entsprechend ausgeformten Radialwand der Radialausnehmung 92) aufgenommen ist, in Umfangsrichtung bis hin zu einem zweiten Ende, an dem ein Sperrkörperglied 116 verschwenkbar gelagert ist, und zwar um eine Sperrkörperglied-Schwenkachse 118. Der Sperrkörperträger 110 erstreckt sich dabei im Wesentlichen entlang einer Sperrkörperträgerachse 114, die vorliegend durch die Sperrkörperträger-Schwenkachse 112 und die Sperrkörperglied-Schwenkachse 118 hindurch verläuft.

Die Sperrkörperglied-Schwenkachse 118 ist parallel zu der Sperrkörperträger-Schwenkachse 112 ausgerichtet.

Das Sperrkörperglied 116 ist mittels einer nicht näher dargestellten elastischen Einrichtung in Bezug auf den Sperrkörperträger 110 in eine Neutralstellung vorgespannt, bei der sich das Sperrkörperglied 116 entlang einer Sperrkörpergliedachse 120 erstreckt, die unter einem Winkel zu der Sperrkörperträgerachse 114 ausgerichtet ist. Die oben bezeichnete elastische Einrichtung oder eine weitere elastische Einrichtung spannt zudem den Sperrkörperträger 110 in die in Fig. 5 dargestellte Position vor, bei der der Sperrkörperträger 110 sich in einer Freigabeposition FP befindet und bei der das daran verschwenkbar gelagerte Sperrkörperglied 116 sich in der Neutralstellung befindet. In dieser Freigabeposition liegt die gesamte Sperrkörperanordnung 90 radial gesehen innerhalb des Außenumfanges der Vorgelegewelle 26" und greift folglich nicht in die Kupplungsverzahnung 94 ein. Es ist in Fig. 5 jedoch zu erkennen, dass der Sperrkörperträger 110 aus der in Fig. 5 gezeigten Freigabeposition radial nach außen verschwenkbar ist, und dass das Sperrkörperglied 116 an dem Sperrkörperträger gegenüber der gezeigten Neutralposition in zwei Richtungen verschwenkbar ist.

Der Sperrkörperträger 110 weist einen Nockenfolgerabschnitt 122 auf, der in der gezeigten Freigabeposition FP an dem Entkupplungsumfangsabschnitt 108 des Nockenkörpers 104 anliegt. Der Nockenfolgerabschnitt 122 kann derart mit dem Abstützumfangsabschnitt 106 zusammenwirken. Bei einer Relativverdrehung der ersten Nockenwelle 42" in Bezug auf die Vorgelegewelle 26" verschwenkt der Abstützumfangsabschnitt 106 den Sperrkörperträger 110 aus der in Fig. 5 gezeigten Freigabeposition radial nach außen, und zwar in eine Kupplungsposition, die in den nachfolgenden Figuren erläutert werden wird. Ein derartiges Verschwenken führt letztlich dazu, dass ein in Umfangsrichtung von dem Sperrkörperträger 110 abgewandter Endabschnitt des Sperrkörpergliedes 116 in die Kupplungsverzahnung 94 greift, um bei einer Drehung der Vorgelegewelle 26" in der Antriebsdrehrichtung 96` das Losrad 88 mitzunehmen, also eine drehfeste Verbindung zu dem Losrad 88 einzurichten.

In der in Fig. 5 gezeigten Freigabeposition FP hingegen ist das Losrad 88 in Drehrichtung von der Vorgelegewelle 26" entkoppelt.

In Fig. 6 ist die Sperrkörperanordnung 90 in einer Explosionsdarstellung gezeigt.

Der Sperrkörperträger 110 weist an seinem einen Umfangsende einen Sperrkörperträgerkopf 128 auf, der in eine schematisch angedeutete Gelenkpfanne 129 greift, die durch eine Radialwand der Radialausnehmung 92 gebildet ist. In Fig. 6 ist schematisch auch die Antriebsdrehrichtung 96` gezeigt und dass bei einer Drehung der Vorgelegewelle 26" in der Antriebsdrehrichtung 96` der Sperrkörperträger 110 zwangsweise in der gleichen Drehrichtung mitgenommen wird.

Radial außen weist der Sperrkörperträger 110 eine Sperrkörperträgerabweisefläche 130 auf, mit der der Sperrkörperträger 110 ggf. an der Kupplungsverzahnung 94 anschlagen kann und hiervon abgewiesen wird, derart, dass der Sperrkörperträger 110 selbst nicht in die Kupplungsverzahnung 94 greifen kann.

An dem in Umfangsrichtung gegenüberliegenden Ende weist der Sperrkörperträger 110 eine Sperrkörperträgerpfanne 132 auf, sowie zwei in Radialrichtung voneinander beabstandete Haltenasen 134. Das Sperrkörperglied 116 weist an einem Umfangsende einen Sperrkörpergliedkopf 136 auf, der so ausgeformt ist, dass er axial in die Gelenkanordnung eingeführt werden kann, die durch die Sperrkörperträgerpfanne 132 und die Haltenasen 134 definiert wird. Hierdurch wird das Sperrkörperglied 116 in Umfangsrichtung unlösbar mit dem Sperrkörperträger 110 gekoppelt. Der Sperrkörpergliedkopf 136 kann sich dann in Umfangsrichtung an der Sperrkörperträgerpfanne 132 abstützen. An dem in Umfangsrichtung gegenüberliegenden Ende weist das Sperrkörperglied 116 einen Mitnahmeabschnitt 138 auf, der in der Freigabeposition FP radial innerhalb des Außenumfanges der Vorgelegewelle 26" liegt, und in der Kupplungsposition (siehe unten) in die Kupplungsverzahnung 94 greift, um das Losrad 88 in Antriebsdrehrichtung 96 mitnehmen zu können.

Die Gelenkverbindungen zwischen dem Sperrkörperträger 110 und der Vorgelegewelle 26" und zwischen dem Sperrkörpergliedkopf 136 und der Sperrkörperträgerpfanne 132 sind jeweils nach der Art von Kurvengelenken ausgebildet, derart, dass jeweilige Drehachsen nicht notwendigerweise ortsfest sind, sondern in Abhängigkeit von der relativen Verdrehung variieren können.

Die Sperrkörperanordnung 90 weist ferner zwei in axialer Richtung beabstandete und sich im Wesentlichen in Umfangsrichtung erstreckende Zapfenlöcher 140 in dem Sperrkörperträger 110 auf, wobei die Zapfenlöcher 140 sich jeweils von der Sperrkörperträgerpfanne 132 in Richtung hin zu dem Sperrkörperträgerkopf 128 erstrecken und jeweils als Durchgangslöcher ausgebildet sind.

Ferner beinhaltet die Sperrkörperanordnung 90 zwei Zapfen 142, die ein erstes Zapfenende 144 mit einem ersten Durchmesser und ein zweites Zapfenende 146 mit einem zweiten Außendurchmesser sowie einen dazwischen liegenden Schulterabschnitt mit einem größeren Außendurchmesser aufweisen. Die Zapfen 142 sind in die Zapfenlöcher 140 eingeführt. Die Zapfenlöcher 140 weisen im Bereich des Sperrkörperträgerkopfes 128 jeweils Schultern auf, so dass die Zapfen 142 nicht in Umfangsrichtung aus den Zapfenlöchern 140 herausgedrückt werden können. In der Anschlagposition stehen die ersten Zapfenenden 144 jedoch gegenüber dem Sperrträgerkopf 128 vor und liegen an der Gelenkpfanne 129 an.

Zwischen den zweiten Zapfenenden 146 und den Sperrkörpergliedkopf 136 sind jeweils Druckfedern 148 angeordnet, die sich an den Schulterabschnitten der Zapfen 142 abstützen und in Umfangsrichtung gegen den Sperrkörpergliedkopf 136 drücken.

Die so gezeigte Federanordnung 149 bewirkt, dass der Sperrkörperträger 110 aufgrund der Kontur der Gelenkpfanne 129 und der daran angreifenden Zapfenenden 144 in Richtung der Freigabeposition FP vorgespannt ist. Ferner bewirkt die Federanordnung 149, dass das Sperrkörperglied 116 in Umfangsrichtung von der Sperrkörperträgerpfanne 132 gegen die Haltenasen 134 weggedrückt wird, wie es in Fig. 5 zu sehen ist, wobei sich das Sperrkörperglied 116 in einer Neutralposition befindet.

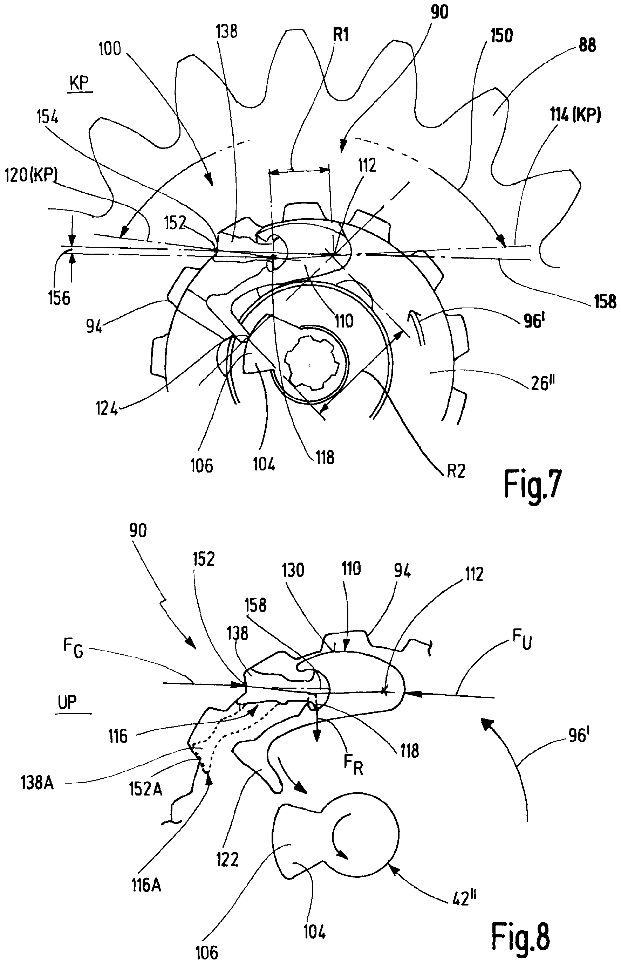

In Fig. 7 ist eine Ansicht der Kupplungsanordnung 100 der Fig. 5 und 6 gezeigt, wobei die Sperrkörperanordnung 90 in eine Kupplungsposition KP verschwenkt worden ist.

Die Nockenwelle wurde so verdreht, dass der Abstützumfangsabschnitt 106 bzw. Nockenkörper 104 über den Nockenfolgerkontakt 124 den Nockenfolgerabschnitt 122 radial nach außen versetzt hat, derart, dass der Sperrkörperträger 110 insgesamt um die Sperrkörperträger-Schwenkachse 112 herum nach außen verschwenkt worden ist. Hierbei liegt die Sperrkörperträgerabweisefläche 130 im Bereich des Außenumfanges der Vorgelegewelle 26".

Ferner liegt der Mitnahmeabschnitt 138 des Sperrkörpergliedes 116 an einer Zahnflanke 154 der Kupplungsverzahnung 94 an und greift damit in diese ein. Ein wirksamer Eingriffspunkt 152 zwischen dem Mitnahmeabschnitt 138 und der Zahnflanke 154 bildet zusammen mit der Sperrkörperträger-Schwenkachse 112 eine gerade Verbindungslinie, die einer Kraftwirklinie 158 entspricht, entlang der Antriebskraft der Vorgelegewelle 26" in Antriebsdrehrichtung 96' über den Sperrkörperträger 110 und das Sperrkörperglied 116 auf die Kupplungsverzahnung 94 und damit auf das Losrad 88 übertragen wird.

Ein radial äußerer Abschnitt des Mitnahmeabschnittes 138 liegt dabei vorzugsweise an einem Zahngrund der Kupplungsverzahnung 94 an.

Das Sperrkörperglied 116 ist dabei gegenüber der in Fig. 5 gezeigten Neutralposition radial nach außen ebenfalls in eine Kupplungsposition verschwenkt worden, derart, dass eine Sperrkörpergliedachse 120 sich in der Kupplungsposition 120 (KP) von dem Eingriffspunkt 152 bis hin zu einer Sperrkörperglied-Schwenkachse 118 erstreckt, die radial versetzt gegenüber der Kraftwirklinie 158 liegt, vorliegend radial innerhalb der Kraftwirklinie 158 liegt. Der Abstand der Sperrkörperglied-Schwenkachse 118 von der Kraftwirklinie 158 ist in Fig. 7 bei 156 dargestellt. In diesem Zustand nehmen, mit anderen Worten, eine Sperrkörperträgerachse 114 (KP) zwischen der Sperrkörperträger-Schwenkachse 112 und der Sperrkörperglied-Schwenkachse 118 und eine Sperrkörpergliedachse 120 (KP) zwischen der Sperrkörperglied-Schwenkachse 118 und dem Eingriffspunkt 152 einen Kraftübertragungswinkel 150 ein, der kleiner als 180° und vorzugsweise kleiner gleich 150° ist.

Die entlang der Antriebsdrehrichtung 96` von der Vorgelegewelle 26" über die Gelenkpfanne 129 in den Sperrkörperträger 110 eingeleitete Kraft wird über die Sperrkörperträgerpfanne 132 und den in der Kupplungsposition KP daran anliegenden Sperrkörpergliedkopf 136 auf das Sperrkörperglied 116 und damit auf die Kupplungsverzahnung 94 übertragen.

Die zwei Glieder der Sperrkörperanordnung, nämlich der Sperrkörperträger 110 und das Sperrkörperglied 116, befinden sich dabei in einer Relativposition zueinander, bei der eine Schwenkachse 118 dazwischen versetzt ist gegenüber der Kraftwirklinie 158. Demzufolge ist es zur Übertragung der Kraft in Umfangsrichtung (Antriebsdrehrichtung 96') auf die Kupplungsverzahnung 94 notwendig, die Sperrkörperanordnung 90 über den Nockenfolgerkontakt 124 abzustützen, wobei sich der Nockenfolgerabschnitt 122 an dem Abstützumfangsabschnitt 106 abstützt.

Dadurch, dass die Sperrkörperglied-Schwenkachse 118 sehr nahe an der Kraftwirklinie 158 liegt, ist die zum Abstützen des Sperrkörperträgers 110 erforderliche Radialkraft relativ gering. Diese wird zudem noch einmal dadurch verringert, dass der Abstand zwischen den Schwenkachsen 112 und 118 kleiner ist als der Abstand zwischen der Sperrkörperträger-Schwenkachse 112 und dem Nockenfolgerkontakt 124, wie es in Fig. 7 bei R1 bzw. R2 gezeigt ist.

In Fig. 8 ist zu erkennen, dass bei der Übertragung der Umfangskraft F_{U} in Antriebsdrehrichtung 96` diese Kraft in der Kraftwirklinie 158 wirkt, wobei eine im Eingriffspunkt 152 vorliegende Gegenkraft F_{G} (beispielsweise bedingt durch eine Antriebsgegenkraft, die gebildet sein kann durch einen Fahrwiderstand oder dergleichen) in der gleichen Kraftwirklinie 158 liegt, von der die Sperrkörperglied-Schwenkachse 118 radial beabstandet ist. Die in entgegengesetzte Richtungen entlang der Kraftwirklinie 158 wirkenden Kräfte F_{U}, F_{G} erzeugen folglich in der Sperrkörperglied-Schwenkachse 118 eine resultierende Kraft F_{R}, die radial nach innen gerichtet ist. Diese Kraft F_{R} wird in der Kupplungsposition KP im Nockenfolgerkontakt 124 abgestützt, indem der Nockenfolgerabschnitt 122 an dem Abstützumfangsabschnitt 106 anliegt.

Sobald sich die Nockenwelle 42" weiterdreht, wie es in Fig. 8 angedeutet ist, verliert der Nockenfolgerabschnitt 122 seine Abstützung durch den Abstützumfangsabschnitt 106, so dass die Sperrkörperglied-Schwenkachse 118 radial frei nach innen gedrückt wird und dabei den Sperrkörperträger 110 mitnimmt, derart, dass dieser in Richtung der Freigabeposition verschwenkt wird, wie es in Fig. 8 durch einen Pfeil angedeutet ist. Diese Position zwischen der Kupplungsposition KP und der Freigabeposition FP wird auch als Übergangsposition UP bezeichnet.

In Fig. 8 ist gezeigt, dass die Sperrkörperglied-Schwenkachse 118 radial nach innen wandert, wodurch sich der Kraftübertragungswinkel 150 (siehe Fig. 7) verkleinern wird.

Das Sperkörperglied 116 weist gemäß Fig. 8 einen einzelnen Mitnahmeabschnitt 138 auf. In einer alternativen Ausgestaltung weist ein Sperrkörperglied 116A zwei (oder mehr) Mitnahmeabschnitte 138, 138A auf, wie es durch eine gestrichelte Linie angedeutet ist. In diesem Fall greift das Sperrkörperglied 116A an zwei Eingriffspunkten 152, 152A an der Kupplungsverzahnung 94 an, insbesondere an Zahnflanken von unterschiedlichen Zähnen der Kupplungsverzahnung 94. Gegenüber der Darstellung der Fig. 8 wird die Teilung der Kupplungsverzahnung 94 für diesen Fall eher kleiner gewählt, so dass die Eingriffspunkte 152, 152A in Umfangsrichtung näher aneinander liegen.

Zudem weist, wie es in Fig. 8 gezeigt ist, der Mitnahmeabschnitt 138 des Sperrkörperglieds 116 im Bereich des Eingriffspunkts 152 eine solche Kontur auf, dass die Sperrkörperanordnung mit dem Sperrkörperglied 116 bei dem Übergang von der Kupplungsposition KP zu der Freigabeposition FP darin unterstützt wird, sich aus der Kupplungsverzahnung 94 zu lösen. Andererseits ist diese Kontur des Mitnahmeabschnitts 138 so ausgebildet, dass das Sperrkörperglied 116 in der Kupplungsposition KP in die Kupplungsverzahnung 94 hineingedrückt wird.

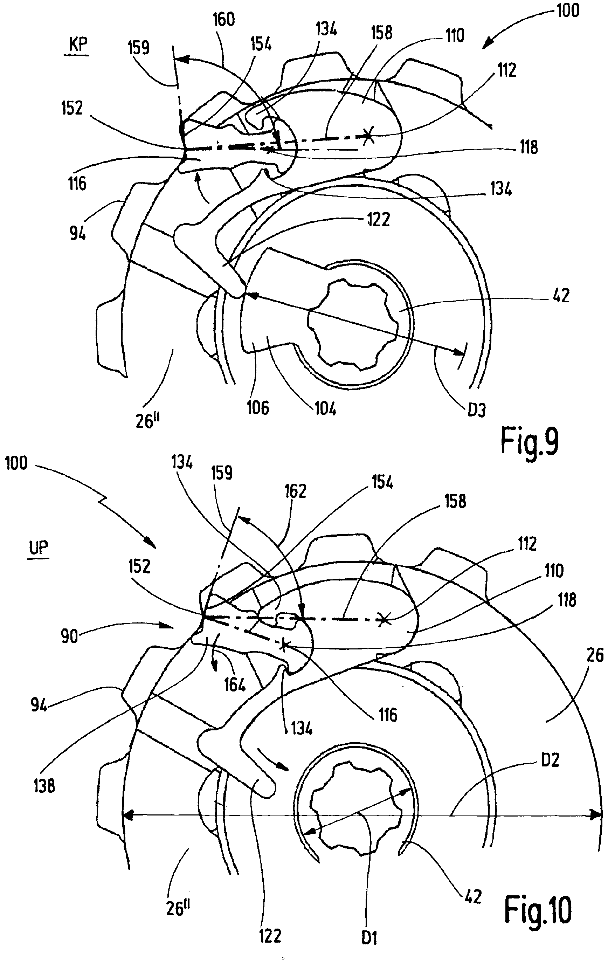

Dies wird im Folgenden anhand der Fig. 9 und 10 erläutert.

In Fig. 9 ist die Kupplungsanordnung 100 in der Kupplungsposition KP gezeigt. In der Kupplungsposition KP ist der Sperrkörperträger 110 fixiert. Das Sperrkörperglied 116 ist um die Sperrkörperglied-Schwenkachse 118 verschwenkbar. Es ist ferner zu erkennen, dass der Mitnahmeabschnitt 138 in der Kupplungsposition an der Zahnflanke 154 der Kupplungsverzahnung 94 in einem Eingriffspunkt 152 angreift, der eigentlich eine senkrecht zur Zeichnungsebene verlaufende Eingriffslinie definiert. Der Mitnehmerabschnitt 138 weist eine Kontur bzw. eine Fläche auf, die die Eingriffslinie beinhaltet und die eine Mitnehmerabschnittebene 159 definiert. Zwischen der Mitnehmerabschnittebene 159 und einer Wirklinie, die durch die Sperrkörperglied-Schwenkachse 118 und den Eingriffspunkt 152 definiert ist, ist ein Winkel 160 gebildet. Der Winkel 160 bildet eine negative Hinterlegungund ist insbesondere größer als 90°. Hierdurch wird erreicht, dass das Sperrkörperglied 116 in der Kupplungsposition und dann, wenn entlang der Kraftwirklinie 158 eine Kraft übertragen wird, das Sperrkörperglied 116 und damit die gesamte Sperrkörperanordnung 90 radial nach außen in die Kupplungsverzahnung 94 hineingedrückt wird. An einem radial inneren Abschnitt des Sperrkörpergliedes 116 ist eine nicht näher bezeichnete Nase ausgebildet, die in der Kupplungsposition KP an einem zugeordneten Zahnkopf anliegt und so in der Kupplungsposition KP für eine definierte Lage des Sperkörpergliedes 116 und für einen definierten Kraftübertragungswinkel 150 sorgt.

In Fig. 10 ist eine Situation ähnlich der Fig. 8 gezeigt, bei der sich die Kupplungsanordnung 100 in einem Übergang von der Kupplungsposition KP zu der Freigabeposition FP befindet. Der Sperrkörperträger 110 ist nicht mehr fixiert und verschwenkt aufgrund der fehlenden Abstützung durch den Abstützumfangsabschnitt 106 radial nach innen. Hierdurch wird der in Fig. 10 nicht näher dargestellte Kraftübertragungswinkel 150 verringert. Das Sperrkörperglied 116 verschwenkt gegen die, eine Schwenkwinkelbegrenzung bildende, radial äußere Haltenase 134, so dass die Sperrkörperanordnung 90 insgesamt nach innen verschwenkt, und zwar um die Sperrkörperträger-Schwenkachse 112 herum. Hierdurch greift der Mitnahmeabschnitt 138 unter einem anderen Winkel an der Zahnflanke 154 der Kupplungsverzahnung 94 an, insbesondere radial weiter innen. Ein Winkel 162 zwischen der Kraftwirklinie 158 (definiert durch die Sperrkörperträger-Schwenkachse 112 und den Eingriffspunkt 152) und der Mitnehmerabschnittebene 159bildet nun eine positive Hinterlegungund ist insbesondere kleiner als 90°. Aufgrund der fortgesetzten Kraftübertragung entlang der Kraftwirklinie 158 wird die Sperrkörperanordnung 90 insgesamt aus der Kupplungsverzahnung 94 herausgedrückt, wie es durch einen Pfeil 164 angedeutet ist.

Die Form des Mitnahmeabschnitts 138, die mit der Zahnflanke 154 in Kontakt kommt, ist so gewählt, dass die oben beschriebenen Wirkungen eintreten.

In den Fig. 9 und 10 sind zudem folgende Durchmesser gezeigt, nämlich ein Durchmesser D1, der den Außendurchmesser der Nockenwelle 42 darstellt, ein Durchmesser D2, der den Außendurchmesser der Vorgelegewelle 26 darstellt (und vorzugsweise den Innendurchmesser des Losrades 88), sowie (siehe Fig. 9) ein Durchmesser D3, der den wirksamen Durchmesser des Abstützumfangsabschnitts 106 bzw. des Nockens 104 darstellt.

Das Verhältnis von D1 zu D2 ist vorzugsweise kleiner als 0,5, insbesondere kleiner als 0,35. Das Verhältnis von D3 zu D2 ist vorzugsweise kleiner als 0,6, vorzugsweise kleiner gleich 0,5.

Hierdurch können die bei der Kraftübertragung von Vorgelegewelle auf Losrad auftretenden Umfangskräfte auf einem relativ geringen Radius abgestützt werden, was die Reibkräfte verringern kann, die erforderlich sind, um die Nockenwelle 42 während einer solchen Kraftübertragung ("unter Last") zu verdrehen.

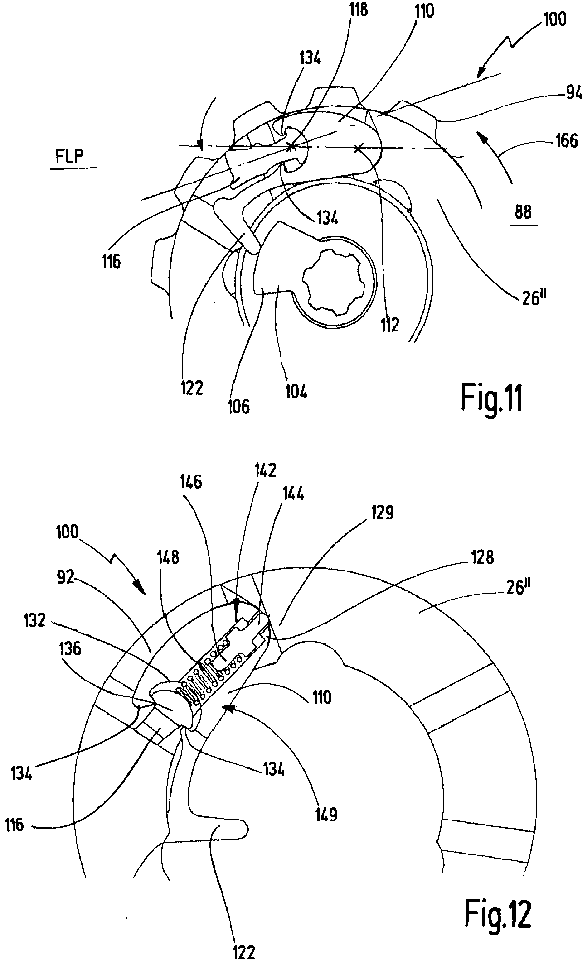

Fig. 11 zeigt die Kupplungsanordnung 100 in einer Freilaufposition FLP.

Der Sperrkörperträger 110 befindet sich in der Kupplungsposition. Der Nockenfolgerabschnitt 122 ist durch den Nocken 104 bzw. den Abstützumfangsabschnitt 106 abgestützt. Bei einer Kraftübertragung von der Vorgelegewelle 26" auf das Losrad 88 befindet sich das Sperrkörperglied 116 ebenfalls in der Kupplungsposition, wie es in Fig. 9 beispielhaft dargestellt ist. Falls nun ausgehend aus der Situation der Fig. 9 das Losrad 88 aus einem beliebigen Grund plötzlich schneller drehen sollte als die Vorgelegewelle 26", tritt eine Freilaufsituation auf, bei der die Verzahnung 94 des Losrades 88 das Sperrkörperglied 116 in Bezug auf den Sperrkörperträger 110 radial nach innen verschwenkt, wie es in Fig. 11 durch einen Pfeil angedeutet ist. Das Sperrkörperglied 116 kann sich aufgrund der Schwenklagerung an dem Sperrkörperträger 110 dabei so verschwenken, dass das Sperrkörperglied 116 vollständig innerhalb des Außenumfanges der Vorgelegewelle 26" angeordnet ist. Das Losrad 88 kann sich folglich weitgehend unbehindert schneller drehen als die Vorgelegewelle 26", so dass die Freilaufmöglichkeit gegeben ist. Die Kupplungsanordnung 100 beinhaltet ja die Federanordnung 149, wie sie in Fig. 6 dargestellt ist. Demzufolge wird das Sperrkörperglied 116 ausgehend aus der in Fig. 11 gezeigten radial nach innen eingeschwenkten Position durch die Federanordnung 149 generell radial nach außen gedrückt, und zwar in die Neutralposition in Bezug auf den Sperrkörperträger 110, wie sie beispielsweise in Fig. 5 dargestellt ist. In der Freilaufposition FLP ist das Sperrkörperglied 116 also ständig bestrebt, wieder radial nach außen zu schwenken, und zwar in die Kupplungsverzahnung 94 hinein. Sofern daher die Überholsituation des Losrades 88 gegenüber der Vorgelegewelle 26", wie sie bei 166 angedeutet ist, beendet ist, und die Vorgelegewelle 26" wieder schneller dreht als das Losrad 88, schwenkt das Sperrkörperglied 116 radial wieder nach außen in die Kupplungsverzahnung hinein, um erneut die Kupplungsposition KP einzurichten, wie sie beispielsweise in Fig. 9 gezeigt ist.

Fig. 12 zeigt eine Schnittansicht der Kupplungsanordnung 100 zur Verdeutlichung der Funktionsweise der Federanordnung 149.

Der Zapfen 142 ist in der Darstellung der Fig. 12 gegenüber einer Anschlagposition in Umfangsrichtung versetzt, da das erste Zapfenende 144 an der Gelenkpfanne 129 anliegt, und zwar in dem Bereich, in dem auch der Sperrkörperträgerkopf 128 an der Gelenkpfanne 129 anliegt. Die Druckfeder 148 ist durch das zweite Zapfenende 146 an dem Zapfen 142 zentriert und drückt in Umfangsrichtung gegen den Sperrkörpergliedkopf 136, derart, dass dieser von der Sperrkörperträgerpfanne 132 in Umfangsrichtung weggedrückt wird, und zwar gegen die Haltenasen 134. Der Sperrkörpergliedkopf 136 ist so in Bezug auf die Haltenasen 134 geformt, dass das Sperrkörperglied 116 durch die Federkraft der Druckfeder 148 in die Neutralposition vorgespannt wird, gegenüber der das Sperrkörperglied 116 sowohl radial nach außen als auch radial nach innen verschwenkbar ist.

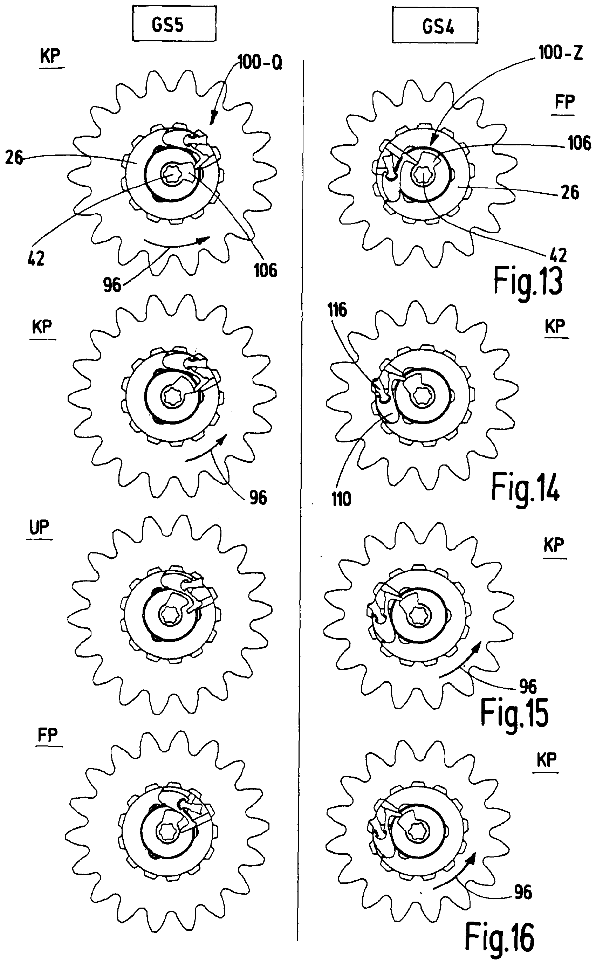

In den Fig. 13 bis 16 ist anhand einer Kupplungsanordnung 100-Q für eine Quell-Gangstufe (beispielsweise Gangstufe 5) und eine Kupplungsanordnung 100-Z für eine Ziel-Gangstufe (beispielsweise Gangstufe 4) für einen Herunterschaltvorgang dargestellt, und zwar in verschiedenen Phasen des Herunterschaltvorganges, der aufgrund der Kupplungsanordnungen 100-Q und 100-Z unter Last stattfinden kann.

Die Gangstufen 5 und 4 als Quell- und Ziel-Gangstufe sind rein beispielhaft gewählt. Es könnten auch die Gangstufen 3 und 2 sein oder dergleichen.

In Fig. 13 ist ein Zustand gezeigt, bei dem die Kupplungsanordnung 100-Q sich in der Kupplungsposition KP befindet, so dass Antriebsleistung 96 über die Kupplungsanordnung 100-Q übertragen werden kann (also beispielsweise von einer Vorgelegewelle auf ein Losrad oder von einem Losrad auf eine Vorgelegewelle). In dem gleichen Zustand der Fig. 13 ist die Kupplungsanordnung 100-Z für die Ziel-Gangstufe in einer Freigabeposition FP, also noch nicht geschaltet.

Zum Herunterschalten wird (beispielsweise durch Betätigen einer Zugscheibe 64 und/oder 80 gemäß Fig. 3) die Kupplungsanordnung 100-Z für die Ziel-Gangstufe betätigt. Dabei wird die Nockenwelle verdreht, und zwar um einen Winkel, der kleiner ist als der Winkel, über den sich der jeweilige Abstützumfangsabschnitt 106 erstreckt. Das bedeutet, dass die Kupplungsanordnung 100-Q nach wie vor in der Kupplungsposition KP ist, also von dem zugehörigen Abstützumfangsabschnitt abgestützt wird. In Fig. 14 befinden sich also beide Kupplungsanordnungen 100-Q und 100-Z in der Kupplungsposition KP. Dabei ist aufgrund der höheren Drehzahl der Quell-Gangstufe die Quell-Kupplungsanordnung 100-Q nach wie vor in Eingriff und überträgt Antriebsleistung 96, wohingegen die Kupplungsanordnung 100-Z in der Kupplungsposition KP ist, jedoch keine Last überträgt. Dies ist daran zu erkennen, dass ein Sperrkörpergliedkopf des Sperrkörpergliedes 116 von der zugeordneten Gelenkpfanne des Sperrkörperträgers 110 in Umfangsrichtung beabstandet ist.

Bei einem Weiterdrehen der Nockenwelle in Bezug auf die Vorgelegewelle in der gleichen Drehrichtung gerät der Nockenfolgerabschnitt 122 der Quell-Kupplungsanordnung 100-Q außer Eingriff mit dem zugeordneten Abstützumfangsabschnitt des Nockens, derart, dass die Quell-Kupplungsanordnung 100-Q in die Übergangsposition UP gelangt. Hierdurch kann die Quell-Kupplungsanordnung 100-Q keine Antriebsleistung mehr übertragen. Die Ziel-Kupplungsanordnung 100-Z gelangt in Eingriff und überträgt in der Kupplungsposition KP Antriebsleistung 96, wie es in Fig. 15 gezeigt ist.

Durch die spezielle Ausgestaltung des Mitnahmeabschnittes der Kupplungsanordnung 100-Q, wie oben beschrieben, gelangt diese weiter außer Eingriff mit der zugeordneten Kupplungsverzahnung und geht in die Freigabeposition FP über, die in KP Fig. 16 gezeigt ist. Die Ziel-Kupplungsanordnung 100-Z verbleibt in der Kupplungsposition und überträgt weiterhin Antriebsleistung 96.

Der gesamte Schaltvorgang kann folglich so ablaufen, dass Antriebsleistung, wie durch den Pfeil 96 abgebildet wird, bis zu dem Zeitpunkt von der Quell-Kupplungsanordnung 100-Q übertragen wird, bis diese entlastet wird und die bereits in der Kupplungsposition KP befindliche Ziel-Kupplungsanordnung 100-Z das Übertragen der Antriebsleistung übernimmt, dann in der niedrigeren Gangstufe (beispielsweise GS 4).

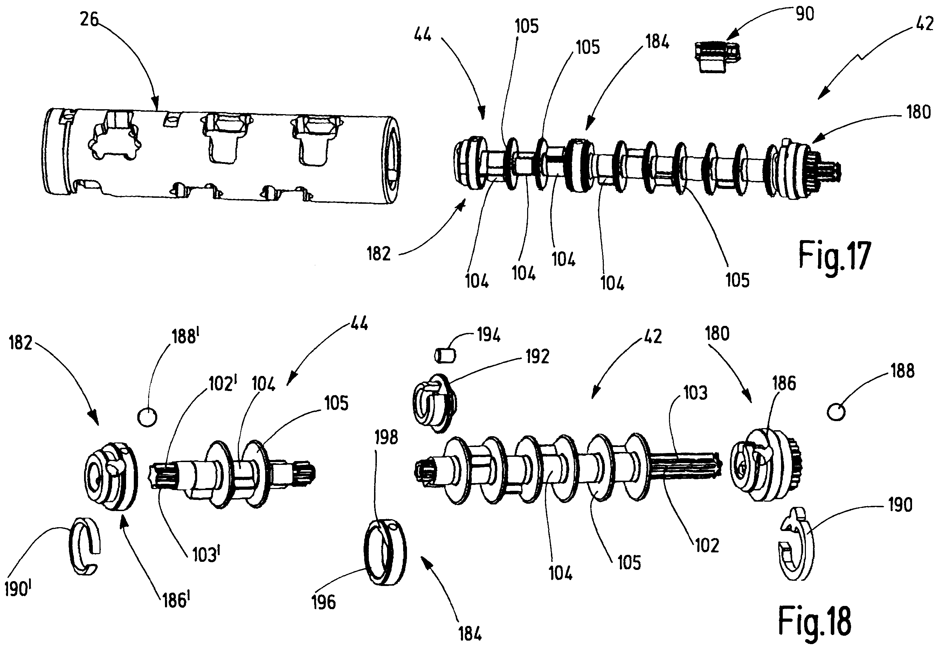

Fig. 17 zeigt in schematischer Form die Nockenwelle 42 und die Nockenwelle 44, die in der Vorgelegewelle 26 angeordnet sind. Die Nockenwellenanordnung, die durch die Nockenwellen 42, 44 gebildet ist, beinhaltet eine erste Rastanordnung 180, die der ersten Nockenwelle 42 zugeordnet ist, und eine zweite Rastanordnung 182, die der zweiten Nockenwelle 44 zugeordnet ist.

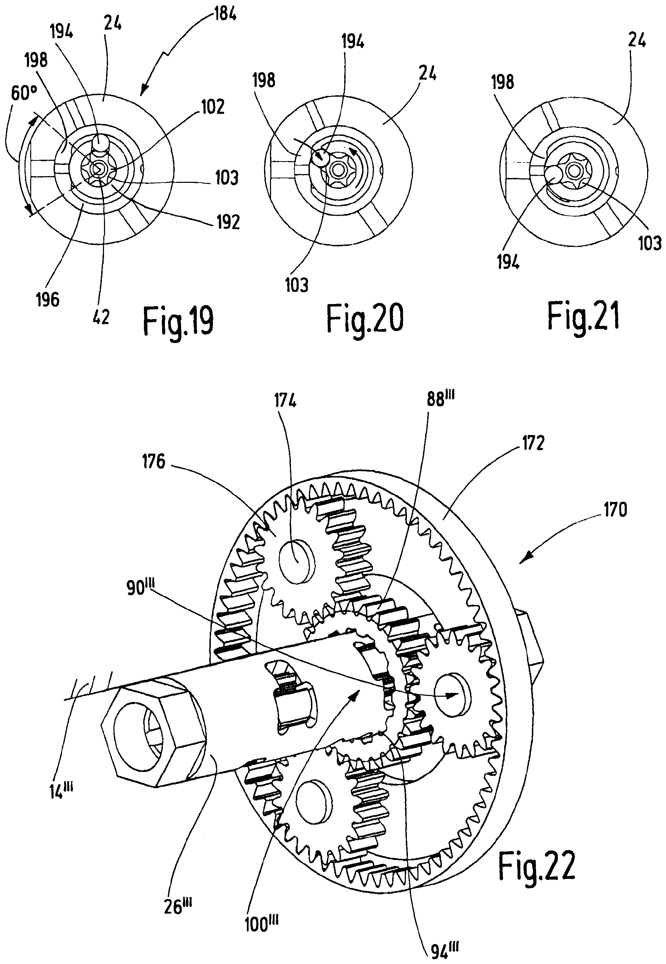

Die Nockenwellen 42, 44 sind über eine Mitnehmeranordnung 184 miteinander gekoppelt, auf eine Art und Weise, wie es nachstehend unter Bezugnahme auf die Fig. 19 bis 21 beschrieben werden wird.

Fig. 18 zeigt die Nockenwellen 42, 44 in einer Explosionsdarstellung.

Man erkennt, dass die Nockenwellen 42, 44 jeweils eine Außenverzahnung 103, 103`haben, die jeweils als Radialverzahnung mit axial ausgerichteten Zähnen und Zahnnuten ausgebildet ist. Zum Bilden der Nockenwellen sind auf die jeweiligen Nockenträgerwellen 102, 102' jeweils abwechselnd Nockenwellenlagerscheiben 105 sowie Nocken bzw. Nockenkörper 104 aufgeschoben. Die Nockenwellen 42, 44 stützen sich jeweils am Innenumfang der Welle 26 über die Nockenwellenlagerscheiben 105 in radialer Richtung ab.

Die Teilung oder die Zahnzahl der Außenverzahnungen 103, 103' kann identisch sein und ist vorzugsweise eine Funktion der Anzahl der Gangstufen.

Die Nockenwellen 42, 44 werden über die jeweiligen Rastanordnungen 180, 182 rastend in jeweiligen Positionen eingerastet, bei denen eine Gangstufe eingelegt ist, sich also ein Nockenfolgerabschnitt 122 an einem Abstützumfangsabschnitt 106 befindet.

Wie es in Fig. 18 gezeigt ist, weisen die Rastanordnungen 180, 182 jeweils ein Positionslager 186, 186' auf, das verdrehfest mit der Welle 26 verbunden ist. An dem Positionslager 186, 186' ist jeweils eine Kugel 188, 188' radial verschieblich gelagert. Die Kugeln 188, 188' sind jeweils in Radialrichtung nach außen gehalten durch Federringe 190, 190', die in Umfangsrichtung offen ausgebildet sind.

Bei einer Relativverdrehung einer Nockenwelle 42, 44 zu der Welle 26 wird die jeweilige Kugel 188, 188' aus einer Zahnnut der Außenverzahnung 103, 103' radial nach außen gedrückt, und zwar gegen die Vorspannung des jeweiligen Federringes. Sobald die Nockenwelle sich so weit gedreht hat, bis sich die Kugel 188, 188' wieder über einer Zahnnut befindet, drückt der jeweilige Federring 190, 190' die Kugel wieder in die Zahnnut, so dass wiederum eine Rastposition eingerichtet ist.

Die Nockenwellen 42, 44 sind über die Mitnehmeranordnung 184 miteinander gekoppelt.

Die Mitnehmeranordnung 184 weist eine Mitnehmerscheibe 192 auf, die verdrehfest auf die Außenverzahnung 103 der Nockenwelle 42 aufgesteckt ist. Die Mitnehmerscheibe 192 ist verdrehbar mit der Nockenwelle 44 verbunden und weist eine Radialnut auf, in der eine Walze 194 gelagert ist (die Drehachse der Walze 194 ist parallel zu der Achse der Nockenwelle 42).

Jener Abschnitt, an dem die Radialnut ausgebildet ist, ist von einem Steuerring 196 übergriffen, an dem die Walze 194 von innen angreift. Die Walze 194 ist, genauso wie die Kugeln 188, 188', an die Größe der Außenverzahnung 103 angepasst, derart, dass die Walze 194 in einen Zahngrund der Außenverzahnung 103 eingreifen kann.

Der Steuerring 196 weist einen Umfangsabschnitt 198 mit geringerem Innendurchmesser auf, mittels dessen eine winkelselektive Mitnahmefunktion zwischen den Nockenwellen 42, 44 eingerichtet wird. Der Umfangsabschnitt 198 erstreckt sich über einen Winkel, der von der Anzahl der Gangstufen abhängt, die der Nockenwelle 42 zugeordnet sind. Vorliegend beträgt der Winkel des Umfangsabschnittes 198 genau 60° (360° geteilt durch sechs Gangstufen = 60°).

Die Funktion der Mitnehmeranordnung 184 wird anhand der Fig. 19 bis 21 im Detail erläutert.

In Fig. 19 ist die Mitnehmeranordnung 184 in einer ersten Position gezeigt. Hierbei liegt die Walze 194 in der Nut der Mitnehmerscheibe 192 und liegt insbesondere am Innenumfang des Steuerrings 196 an, und zwar in einem Bereich außerhalb des Umfangsabschnittes 198. Die Nockenwelle 42 kann folglich frei gedreht werden, um auf diese Weise die der Nockenwelle 42 zugeordneten Gangstufen zu schalten (im vorliegenden Fall sechs Gangstufen).

Wenn die Nockenwelle mit der daran befestigten Mitnehmerscheibe 192 so weit gedreht wird, bis die Walze 194 in Eingriff mit dem Umfangsabschnitt 198 gelangt (Fig. 20), wird die Walze 194 radial nach innen gedrückt, und zwar in die Außenverzahnung 103 der Nockenwelle 42 hinein.

Eine weitere Verdrehung der Nockenwelle 42 führt folglich zu einer Mitnahme der Mitnehmerscheibe 192, die dann verdrehfest mit der zweiten Nockenwelle 44 verbunden ist. Folglich wird über den Umfangsabschnitt 198 die zweite Nockenwelle 44 in Drehrichtung mitgenommen, wenn die erste Nockenwelle 42 verdreht wird. Dies führt dazu, dass auch eine Gangstufe geschaltet wird, die der zweiten Nockenwelle 44 zugeordnet ist.

Diese Funktion wird dazu genutzt, um eine Schaltung zu vollziehen, bei der beide Getriebegruppen zu schalten sind.

Bei einem Getriebe, das zwei Getriebegruppen aufweist, denen sechs bzw. drei Gangstufen zugeordnet sind, werden folglich die Gangstufen 1 bis 6 allein durch Verdrehen der ersten Nockenwelle 42 geschaltet. Die zweite Nockenwelle 44 bleibt dabei stehen und wird von der Rasteinrichtung 182 in der Drehposition gehalten.

Beim Schalten der Gangstufe 7 gerät die erste Nockenwelle 42 wieder in eine Position, die der ersten Vorwärtsgangstufe der ersten Getriebegruppe entspricht, und die zweite Nockenwelle 44, die dabei mitgenommen wird, und zwar mittels des Umfangsabschnittes 198, wird in die nächste Gangstufe der zweiten Getriebegruppe geschaltet, so dass dann die Gangstufe 7 eingelegt wird. Anschließend werden die Gangstufen 8 bis 12 wieder geschaltet, ohne die zweite Nockenwelle 44 mitzunehmen. Zum Einlegen der Vorwärtsgangstufe 13 wird dann wiederum die zweite Nockenwelle 44 mitgenommen, um eine Gangstufe zu schalten, die der zweiten Nockenwelle 44 und damit der zweiten Getriebegruppe zugeordnet ist.

In Fig. 22 ist eine weitere Ausführungsform einer Kupplungsanordnung 100‴ gezeigt, die hinsichtlich Aufbau und Funktionsweise der oben beschriebenen Kupplungsanordnung 100 entspricht, wobei gleiche Elemente durch gleiche Bezugszeichen gekennzeichnet sind, und die dazu dient, ein erstes Drehglied in Form eines Sonnenrades 88‴ bedarfsweise mit einem zweiten Glied in Form einer gehäusefesten Nabe 26‴ zu kuppeln.

Das Sonnenrad 88‴ ist Teil eines Planetenradsatzes 170, der ein Hohlrad 172 sowie einen Planetenträger 174 aufweist. An dem Planetenträger 174 ist eine Mehrzahl von Planeten 176 drehbar gelagert, die in eine Innenverzahnung des Hohlrades 172 und in einer Außenverzahnung des Sonnenrades 88‴ greifen. Das Sonnenrad 88‴ weist ferner an seinem Innenumfang eine Kupplungsverzahnung 94‴ auf.

Generell kann sich das Sonnenrad 88‴ frei in Bezug auf die Nabe 26‴ verdrehen. Durch eine Verdrehung einer nicht dargestellten Nockenwelle (entsprechend der Nockenwelle 42 bei der Kupplungsanordnung 100 der Fig. 4 bis 12) kann die an der Nabe 26‴ gelagerte Sperrkörperanordnung 90‴ radial nach außen verschwenkt werden, so dass sie in die Kupplungsverzahnung 94‴ des Sonnenrades 88‴ greift, um das Sonnenrad 88‴ in einer Antriebsrichtung gehäusefest zu halten, und in der entgegengesetzten Drehrichtung eine Freilauffunktion zu realisieren.

Der Aufbau der Kupplungsanordnung 100‴ kann dabei identisch sein zu der Kupplungsanordnung 100 der Fig. 4 bis 12.

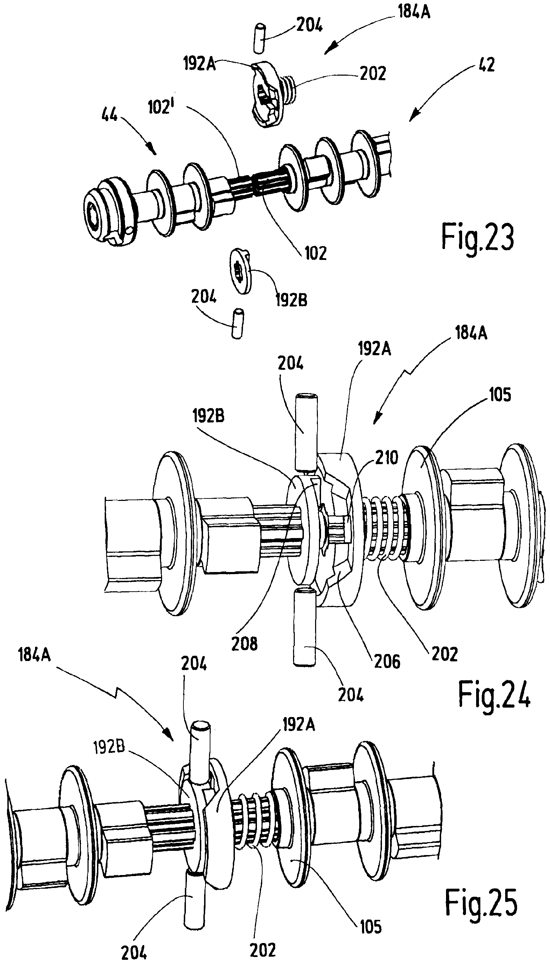

In den Fig. 23 bis 25 ist eine alternative Ausführungsform einer Mitnehmeranordnung 184A gezeigt, deren Funktion identisch ist zu jener der Mitnehmeranordnung 184, die oben beschrieben worden ist.

Die Mitnehmeranordnung 184A der Fig. 23 bis 25 beinhaltet eine erste Mitnehmerscheibe 192A und eine zweite Mitnehmerscheibe 192B, eine Druckfeder 202 sowie zwei radial ausgerichtete Mitnehmerstifte 204.

Die erste Mitnehmerscheibe 192A ist drehfest, jedoch axial verschieblich an der ersten Nockenträgerwelle 102 gelagert. Die zweite Mitnehmerscheibe 192B ist verdrehfest und axial fest an der zweiten Nockenträgerwelle 102' der zweiten Nockenwelle 44 festgelegt.

Die erste Mitnehmerscheibe 192A wird mittels der Druckfeder 202, die sich an einer Nockenwellenscheibe 105 axial abstützt, gegen die zweite Mitnehmerscheibe 192B angedrückt.

Die Mitnehmerstifte 204 sind fest in nicht näher dargestellten radialen Bohrungen der Welle 26 eingepresst und erstrecken sich von deren Innenumfang radial nach innen.

Die erste Mitnehmerscheibe 192A weist einen Öffnungswinkel 206 und eine sich axial erstreckende Nut 210 auf. Die zweite Mitnehmerscheibe 192B weist einen sich axial erstreckenden Zapfen 208 auf.

In Fig. 24 ist eine Stellung der Mitnehmeranordnung 184A gezeigt, bei der die Nockenwellen 42, 44 voneinander entkoppelt sind, so dass eine Verdrehung der ersten Nockenwelle 42 ausschließlich ein Schalten innerhalb der ersten Getriebegruppe bewirkt, die zweite Nockenwelle 44 jedoch nicht mitgedreht wird. In dieser Stellung stützt sich die erste Mitnehmerscheibe 192A axial an den Mitnehmerstiften 204 ab, wird also von der Druckfeder 202 axial gegen die Stifte 204 gedrückt. Hierbei sind die Mitnehmerscheiben 192A, 192B voneinander entkoppelt.

Sobald die erste Nockenwelle so weit verdreht wird, bis die Mitnehmerstifte 204 in den Bereich des Öffnungswinkels 206 gelangen, kann die Druckfeder 202 die erste Mitnehmerscheibe 192A axial gegen die zweite Mitnehmerscheibe 192B drücken, wobei der Zapfen 208 in eine Nut 210 der ersten Mitnehmerscheibe 192A eingedrückt wird, so dass eine Drehkopplung zwischen den Mitnehmerscheiben 192A, 192B realisiert wird. Dies ist in Fig. 25 gezeigt.

Ein weiteres Verdrehen der ersten Nockenwelle 42 führt also gleichzeitig zu einem Verdrehen der zweiten Nockenwelle 44, so dass beide Getriebegruppen geschaltet werden können. Anschließend gelangt die Anordnung aus den Mitnehmerstiften 204 wieder aus dem Bereich des Öffnungswinkels 206 heraus. Folglich wird die erste Mitnehmerscheibe 192A aufgrund einer Übergangsschräge an den Mitnehmerstiften 204 axial gegen die Kraft der Feder 202 von der zweiten Mitnehmerscheibe 192B weggedrückt, so dass die Mitnehmerscheiben 192A, 192B wieder außer Eingriff gelangen.

Folglich können für die nächsten Verdrehungen über jeweils bspw. Winkel von 60° nur noch Gangstufen der ersten Getriebegruppe geschaltet werden, bis wieder der Öffnungswinkel 206 erreicht wird, um dann wiederum eine Gangstufe auch in der zweiten Getriebegruppe zu schalten. Dies erfolgt, wie bei dem obigen Beispiel der Fig. 17 bis 21 bspw. beim Schalten der Gangstufen 6 nach 7 und von 12 nach 13.

## Patentansprüche

1. Kupplungsanordnung (100) zum Kuppeln von Gliedern (88, 26), insbesondere als Gangschaltkupplung in einer Getriebeeinheit (10), mit
- einem ersten Glied (88), das eine Kupplungsverzahnung (94) aufweist,
- einem zweiten Glied (26), an dem wenigstens eine Sperrkörperanordnung (90) verschwenkbar gelagert ist, wobei die Sperrkörperanordnung (90) in eine Kupplungsposition (KP) verschwenkbar ist, bei der ein Mitnahmeabschnitt (138) der Sperrkörperanordnung (90) in die Kupplungsverzahnung (94) greift, um das erste Glied (88) mit dem zweiten Glied (26) gegenüber einer Relativbewegung in einer ersten Richtung (96) fomschlüssig zu koppeln, und wobei die Sperrkörperanordnung (90) in eine Freigabeposition (FP) verschwenkbar ist, bei der der Mitnahmeabschnitt (138) der Sperrkörperanordnung (90) nicht in die Kupplungsverzahnung (94) greift,
**dadurch gekennzeichnet, dass**
die Sperrkörperanordnung (90) einen Sperrkörperträger (110) aufweist, der verschwenkbar an dem zweiten Glied (26) gelagert ist, und ein Sperrkörperglied (116) aufweist, das an dem Sperrkörperträger (110) verschwenkbar gelagert ist und an dem der Mitnahmeabschnitt (138) ausgebildet ist, wobei
in der Kupplungsposition (KP) eine Kraftwirklinie (158) zwischen (i) einer Sperrkörperträger-Schwenkachse (112), die in der Kupplungsposition (KP) zwischen dem zweiten Glied (26) und dem Sperrkörperträger (110) eingerichtet ist, und (ii) einem Eingriffspunkt (152) eingerichtet ist, an dem der Mitnahmeabschnitt (138) an der Kupplungsverzahnung (94) angreift, wobei eine Sperrkörperglied-Schwenkachse (118), die in der Kupplungsposition (KP) zwischen dem Sperrkörperglied (116) und dem Sperrkörperträger (110) eingerichtet ist, in der Kupplungsposition (KP) radial versetzt gegenüber der Kraftwirklinie (158) liegt.

2. Kupplungsanordnung nach Anspruch 1, **dadurch gekennzeichnet, dass** das erste Glied (88) und/oder das zweite Glied (26) ein Drehglied ist, das um eine Drehachse (27) verdrehbar ist, wobei die Kupplungsanordnung (100) dazu dient, das erste und das zweite Glied (88, 26) drehfest miteinander zu verbinden, und wobei die erste Richtung eine Drehrichtung (96) ist.

3. Kupplungsanordnung nach Anspruch 1 oder 2, **dadurch gekennzeichnet, dass** der Sperrkörperträger (110) in der Kupplungsposition (KP) gegenüber einem Verschwenken in Richtung der Freigabeposition (FP) mittels eines Abstützgliedes (104) abgestützt ist.

4. Kupplungsanordnung nach Anspruch 3, **dadurch gekennzeichnet, dass** das Abstützglied (104) zwischen einer Abstützposition, in der es den Sperrkörperträger (110) abstützt, und einer Entkupplungsposition versetzbar ist, in der das Abstützglied (104) ein Verschwenken des Sperrkörperträgers (110) in die Freigabeposition (FP) zulässt.

5. Kupplungsanordnung nach einem der Ansprüche 1 - 4, **dadurch gekennzeichnet, dass**
- in der Kupplungsposition (KP) ein Abstand (156) zwischen der Kraftwirklinie (158) und der Sperrkörperglied-Schwenkachse (118) größer ist als 0 mm und kleiner ist als 5 mm, und/oder dass
- in der Kupplungsposition (KP) ein Verhältnis zwischen (i) einem Abstand (156) zwischen der Kraftwirklinie (158) und der Sperrkörperglied-Schwenkachse (118) und (ii) einem Abstand (R1) zwischen der Sperrkörperglied-Schwenkachse (118) und der Sperrkörperträger-Schwenkachse (112) kleiner ist als 1:4 und größer ist als Null, und/oder dass
- in der Kupplungsposition (KP) ein Verhältnis zwischen (i) einem Abstand (156) zwischen der Kraftwirklinie (158) und der Sperrkörperglied-Schwenkachse (118) und (ii) einem Abstand zwischen der Sperrkörperglied-Schwenkachse (118) und dem Eingriffspunkt (152) kleiner ist als 1:4 und größer ist als Null.

6. Kupplungsanordnung nach einem der Ansprüche 1 - 5, **dadurch gekennzeichnet, dass** der Sperrkörperträger (110) in der Kupplungsposition (KP) entlang einer Sperrkörperträgerachse (114 (KP)) ausgerichtet ist, wobei das Sperrkörperglied (116) in der Kupplungsposition (KP) entlang einer Sperrkörpergliedachse (120 (KP)) ausgerichtet ist, wobei die Sperrkörperträgerachse (114 (KP)) und die Sperrkörpergliedachse (120 (KP)) in der Kupplungsposition (KP) unter einem Kraftübertragungswinkel (150) größer gleich 150° und kleiner 180° zueinander ausgerichtet sind.

7. Kupplungsanordnung nach einem der Ansprüche 1 - 6, **dadurch gekennzeichnet, dass** in der Kupplungsposition (KP) das Sperrkörperglied (116) aus einer Sperrkörperglied-Kupplungsposition in eine Freilaufposition (FLP) verschwenkbar ist.

8. Kupplungsanordnung nach einem der Ansprüche 1 - 7, **dadurch gekennzeichnet, dass** das Sperrkörperglied (116) an dem Sperrkörperträger (110) in eine Neutralposition vorgespannt ist, aus der sich das Sperrkörperglied (116) in zwei entgegengesetzte Richtungen in Bezug auf die Neutralposition verschwenken lässt.

9. Kupplungsanordnung nach einem der Ansprüche 1 - 8, **dadurch gekennzeichnet, dass** der Sperrkörperträger (110) an einem ersten Ende einen Sperrkörperträgerkopf (128) aufweist, der einer Gelenkpfanne (129) des zweiten Gliedes (26) zugeordnet ist, um ein erstes Verschwenklager zwischen dem zweiten Glied (26) und dem Sperrkörperträger (110) zu bilden.

10. Kupplungsanordnung nach einem der Ansprüche 1 - 9, **dadurch gekennzeichnet, dass** der Sperrkörperträger (110) an einem zweiten Ende eine Sperrkörperträgerpfanne (132) aufweist, der ein Sperrkörpergliedkopf (136) des Sperrkörpergliedes (116) zugeordnet ist, um ein zweites Verschwenklager zwischen dem Sperrkörperträger (110) und dem Sperrkörperglied (116) zu bilden, wobei der Sperrkörperträger (110) vorzugsweise wenigstens eine Haltenase (138) aufweist, die den Sperrkörpergliedkopf (136) übergreift, um das Sperrkörperglied (116) in Antriebsrichtung in Bezug auf den Sperrkörperträger (110) zu halten.

11. Kupplungsanordnung nach einem der Ansprüche 1 - 10, **dadurch gekennzeichnet, dass** der Mitnahmeabschnitt (138) so ausgebildet ist, dass die Sperrkörperanordnung (90), bei Übertragung einer Antriebskraft von dem zweiten Glied (26) auf das erste Glied (88) und dann, wenn sich die Sperrkörperanordnung (90) in der Kupplungsposition (KP) befindet, in die Kupplungsverzahnung (94) hineingedrückt wird.

12. Kupplungsanordnung nach einem der Ansprüche 1 - 11, **dadurch gekennzeichnet, dass** der Mitnahmeabschnitt (138) so ausgebildet ist, dass die Sperrkörperanordnung (90), bei Übertragung einer Antriebskraft von dem zweiten Glied (26) auf das erste Glied (88) und dann, wenn die Sperrkörperanordnung (90) in Richtung der Freigabeposition (FP) aus der Kupplungsposition (KP) heraus verschwenkt ist, aus der Kupplungsverzahnung (94) herausgedrückt wird.

13. Kupplungsanordnung nach einem der Ansprüche 1 - 12, **dadurch gekennzeichnet, dass** der Sperrkörperträger (110) in einer Sperrkörperträger-Freigabeposition mittels einer elastischen Federeinrichtung gehalten ist, wobei die elastische Federeinrichtung vorzugsweise eine Druckfederanordnung (148) aufweist, die zwischen einem Zapfen (142), der an dem zweiten Glied (26) anliegt, und dem Sperrkörperglied (116) wirkt.

14. Getriebeeinheit (10), insbesondere für ein per Muskelkraft antreibbares Fahrzeug, mit einem Zahnrad (88), das ein erstes Drehglied bildet, mit einer Getriebewelle (26), die ein zweites Drehglied bildet, wobei das Zahnrad (88) drehbar an der Getriebewelle (26) gelagert ist, und mit einer Kupplungsanordnung (100) nach einem der Ansprüche 1 - 13, wobei das Zahnrad (88) mittels der Kupplungsanordnung (100) in einer Antriebsdrehrichtung (96) mit der Getriebewelle (26) verbindbar ist.

## Claims

1. A coupling arrangement (100) for coupling members (88, 26), in particular as a gear change coupling in a gear mechanism unit (10), with
- a first member (88) which has a coupling toothing system (94),
- a second member (26), on which at least one locking body arrangement (90) is mounted pivotably, it being possible for the locking body arrangement (90) to be pivoted into a coupling position (KP), in the case of which a driving section (138) of the locking body arrangement (90) engages into the coupling toothing system (94), in order to couple the first member (88) to the second member (26) in a positively locking manner with respect to a relative movement in a first direction (96), and it being possible for the locking body arrangement (90) to be pivoted into a release position (FP), in the case of which the driving section (138) of the locking body arrangement (90) does not engage into the coupling toothing system (94),
**characterized in that**
the locking body arrangement (90) has a locking body carrier (110) which is mounted pivotably on the second member (26), and has a locking body member (116) which is mounted pivotably on the locking body carrier (110) and on which the driving section (138) is configured, wherein
in the coupling position (KP), a force action line (158) is set up between (i) a locking body carrier pivot axis (112), which is set up in the coupling position (KP) between the second member (26) and the locking body carrier (110), and (ii) an engagement point (152), at which the driving section (138) acts on the coupling toothing system (94), a locking body member pivot axis (118) which is set up in the coupling position (KP) between the locking body member (116) and the locking body carrier (110) lying offset radially with respect to the force action line (158) in the coupling position (KP).

2. The coupling arrangement as claimed in claim 1, **characterized in that** the first member (88) and/or the second member (26) are/is a rotary member which can be rotated about a rotational axis (27), the coupling arrangement (100) serving to connect the first and the second member (88, 26) fixedly to one another so as to rotate together, and the first direction being a rotational direction (96).

3. The coupling arrangement as claimed in claim 1 or 2, **characterized in that**, in the coupling position (KP), the locking body carrier (110) is supported by means of a supporting member (104) with respect to pivoting in the direction of the release position (FP).

4. The coupling arrangement as claimed in claim 3, **characterized in that** the supporting member (104) can be moved between a supporting position, in which it supports the locking body carrier (110), and a decoupling position, in which the supporting member (104) permits pivoting of the locking body carrier (110) into the release position (FP).

5. The coupling arrangement as claimed in one of claims 1 to 4, **characterized in that**,
- in the coupling position (KP), a spacing (156) between the force action line (158) and the locking body member pivot axis (118) is greater than 0 mm and is smaller than 5 mm, and/or **in that**,
- in the coupling position (KP), a ratio between (i) a spacing (156) between the force action line (158) and the locking body member pivot axis (118) and (ii) a spacing (R1) between the locking body member pivot axis (118) and the locking body carrier pivot axis (112) is smaller than 1:4 and is greater than zero, and/or **in that**,
- in the coupling position (KP), a ratio between (i) a spacing (156) between the force action line (158) and the locking body member pivot axis (118) and (ii) a spacing between the locking body member pivot axis (118) and the engagement point (152) is smaller than 1:4 and is greater than zero.

6. The coupling arrangement as claimed in one of claims 1 to 5, **characterized in that**, in the coupling position (KP), the locking body carrier (110) is oriented along a locking body carrier axis (114 (KP)), the locking body member (116) being oriented in the coupling position (KP) along a locking body member axis (120 (KP)), the locking body carrier axis (114 (KP)) and the locking body member axis (120 (KP)) in the coupling position (KP) being oriented with respect to one another at a force transmission angle (150) of greater than or equal to 150° and less than 180°.

7. The coupling arrangement as claimed in one of claims 1 to 6, **characterized in that**, in the coupling position (KP), the locking body member (116) can be pivoted out of a locking body member coupling position into a freewheel position (FLP).

8. The coupling arrangement as claimed in one of claims 1 to 7, **characterized in that** the locking body member (116) is prestressed on the locking body carrier (110) into a neutral position, out of which the locking body member (116) can be pivoted in two opposed directions in relation to the neutral position.

9. The coupling arrangement as claimed in one of claims 1 to 8, **characterized in that**, at a first end, the locking body carrier (110) has a locking body carrier head (128) which is assigned to a joint socket (129) of the second member (26), in order to form a first pivoting bearing between the second member (26) and the locking body carrier (110).

10. The coupling arrangement as claimed in one of claims 1 to 9, **characterized in that**, at a second end, the locking body carrier (110) has a locking body carrier socket (132) which is assigned a locking body member head (136) of the locking body member (116), in order to form a second pivoting bearing between the locking body carrier (110) and the locking body member (116), wherein the locking body carrier (110) preferably has at least one holding lug (138) which engages over the locking body member head (136), in order to hold the locking body member (116) in the drive direction in relation to the locking body carrier (110).

11. The coupling arrangement as claimed in one of claims 1 to 10, **characterized in that** the driving section (138) is configured in such a way that the locking body arrangement (90) is pressed into the coupling toothing system (94) in the case of the transmission of a drive force from the second member (26) to the first member (88) and when the locking body arrangement (90) is situated in the coupling position (KP).

12. The coupling arrangement as claimed in one of claims 1 to 11, **characterized in that** the driving section (138) is configured in such a way that the locking body arrangement (90) is pressed out of the coupling toothing system (94) in the case of the transmission of a drive force from the second member (26) to the first member (88) and when the locking body arrangement (90) is pivoted out of the coupling position (KP) in the direction of the release position (FP).

13. The coupling arrangement as claimed in one of claims 1 to 12, **characterized in that** the locking body carrier (110) is held in a locking body carrier release position by means of an elastic spring device, wherein the elastic spring device preferably has a compression spring arrangement (148) which acts between a pin (142), which bears against the second member (26), and the locking body member (116).

14. A gear mechanism unit (10), in particular for a vehicle which can be driven by muscle power, with a gearwheel (88) which forms a first rotary member, with a gear mechanism shaft (26) which forms a second rotary member, wherein the gearwheel (88) is mounted rotatably on the gear mechanism shaft (26), and with a coupling arrangement as claimed in one of claims 1 to 13, it being possible for the gearwheel (88) to be connected to the gear mechanism shaft (26) in a drive rotational direction (96) by means of the coupling arrangement (100).

## Revendications

1. Agencement de couplage (100) pour le couplage d'éléments (88, 26), en particulier en tant qu'accouplement à changement de vitesse dans une unité de transmission (10), ayant
- un premier élément (88), qui présente une denture de couplage (94),
- un deuxième élément (26) sur lequel au moins un agencement (90) de corps de verrouillage est monté de manière pivotante, l'agencement (90) de corps de verrouillage étant apte à être pivoté dans une position de couplage (KP) dans laquelle une partie d'entraînement (138) de l'agencement (90) de corps de verrouillage s'engage dans la denture de couplage (94), pour relier le premier élément (88) au deuxième élément (26) par complémentarité de forme par rapport à un mouvement relatif dans une première direction (96), et l'agencement (90) de corps de verrouillage étant apte à être pivoté dans une position de libération (FP) dans laquelle la partie d'entraînement (138) de l'agencement (90) de corps de verrouillage ne s'engage pas dans la denture de couplage (94),
**caractérisé en ce que**
l'agencement (90) de corps de verrouillage présente un support (110) de corps de verrouillage qui est monté de manière pivotante sur le deuxième élément (26), et présente un élément (116) formant corps de verrouillage qui est monté de manière pivotante sur le support (110) de corps de verrouillage et sur lequel est formée la partie d'entraînement (138), dans lequel
dans la position de couplage (KP), une ligne d'action de force (158) est établie entre (i) un axe (112) de pivotement de support de corps de verrouillage établi dans la position de couplage (KP) entre le deuxième élément (26) et le support (110) de corps de verrouillage, et (ii) un point d'engagement (152), au niveau duquel la partie d'entraînement (138) vient en prise avec la denture de couplage (94), un axe (118) de pivotement d'élément de corps de verrouillage, agencé dans la position de couplage (KP) entre l'élément (116) formant corps de verrouillage et le support (110) de corps de verrouillage, étant décalé radialement par rapport à la ligne d'action de force (158) dans la position de couplage (KP).

2. Agencement de couplage selon la revendication 1, **caractérisé en ce que** le premier élément (88) et/ou le deuxième élément (26) est un élément rotatif qui est apte à tourner autour d'un axe de rotation (27), l'agencement de couplage (100) étant destiné à lier en rotation le premier et le deuxième élément (88, 26) l'un à l'autre, et le premier sens étant un sens de rotation (9).

3. Agencement de couplage selon la revendication 1 ou 2, **caractérisé en ce que** le support (110) de corps de verrouillage est supporté dans la position de couplage (KP) par rapport à un pivotement en direction de la position de libération (FP) au moyen d'un élément de support (104).

4. Agencement de liaison selon la revendication 3, **caractérisé en ce que** l'élément d'appui (104) est apte à être déplacé entre une position d'appui, dans laquelle il supporte le support (110) de corps de verrouillage, et une position de découplage, dans laquelle l'élément d'appui (104) permet un pivotement du support (110) de corps de verrouillage vers la position de libération (FP).

5. Agencement de couplage selon l'une quelconque des revendications 1 à 4, **caractérisé en ce que**
- dans la position de couplage (KP), une distance (156) entre la ligne d'action de force (158) et l'axe (118) de pivotement de l'élément formant corps de verrouillage est supérieure à 0 mm et inférieure à 5 mm, et/ou **en ce que**
- dans la position de couplage (KP), un rapport entre (i) une distance (156) entre la ligne d'action de force (158) et l'axe (118) de pivotement d'élément de corps de verrouillage et (ii) une distance (R1) entre l'axe (118) de pivotement d'élément de corps de verrouillage et l'axe (112) de pivotement de support de corps de verrouillage est inférieur à 1:4 et est supérieur à zéro, et/ou **en ce que**
- dans la position de couplage (KP), un rapport entre (i) une distance (156) entre la ligne d'action de force (158) et l'axe (118) de pivotement de l'élément formant corps de verrouillage et (ii) une distance entre l'axe (118) de pivotement de l'élément formant corps de verrouillage et le point d'engagement (152) est inférieur à 1:4 et supérieur à zéro.

6. Agencement de couplage selon l'une quelconque des revendications 1 à 5, **caractérisé en ce que** le support (110) de corps de verrouillage est, dans la position de couplage (KP), orienté le long d'un axe (114 (KP)) de support de corps de verrouillage, l'élément (116) formant corps de verrouillage étant, dans la position de couplage (KP), orienté le long d'un axe d'élément de corps de verrouillage (120 (KP)), l'axe (114 (KP)) de support du corps de verrouillage et l'axe (120 (KP)) de l'élément de corps de verrouillage étant, dans la position de couplage (KP), orientés l'un par rapport à l'autre selon un angle de transmission de force (150) supérieur ou égal à 150° et inférieur à 180°.

7. Agencement de couplage selon l'une des revendications 1 à 6, **caractérisé en ce que** dans la position de couplage (KP), l'élément (116) formant corps de verrouillage est apte à pivoter d'une position de couplage de l'élément formant corps de verrouillage à une position de roue libre (FLP).

8. Agencement de couplage selon l'une des revendications 1 à 7, **caractérisé en ce que** l'élément (116) formant corps de verrouillage est, sur le support (110) de corps de verrouillage, sollicité dans une position neutre à partir de laquelle l'élément (116) formant corps de verrouillage est apte à pivoter dans deux directions opposées par rapport à la position neutre.

9. Agencement de couplage selon l'une quelconque des revendications 1 à 8, **caractérisé en ce que** le support (110) de corps de verrouillage comporte à une première extrémité une tête (128) de support de corps de verrouillage associée à une cavité d'articulation (129) du deuxième élément (26) pour former un premier palier de pivotement entre le deuxième élément (26) et le support (110) de corps de verrouillage.

10. Agencement de couplage selon l'une quelconque des revendications 1 à 9, **caractérisé en ce que** le support (110) de corps de verrouillage comporte, à une deuxième extrémité, une cavité (132) de support de corps de verrouillage, à laquelle est associée une tête (136) d'élément formant corps de verrouillage de l'élément (116) formant corps de verrouillage, pour former un deuxième palier de pivotement entre le support (110) de corps de verrouillage et l'élément (116) formant corps de verrouillage, le support de corps de verrouillage (110) comprenant de préférence au moins un nez de retenue (138) qui s'engage sur la tête (136) d'élément formant corps de verrouillage pour retenir l'élément (116) formant corps de verrouillage dans la direction d'entraînement par rapport au support (110) de corps de verrouillage.

11. Agencement de couplage selon l'une quelconque des revendications 1 à 10, **caractérisé en ce que** la partie d'entraînement (138) est configurée pour pousser l'agencement (90) de corps de verrouillage dans la denture de couplage (94) lorsqu'une force d'entraînement est transmise depuis le deuxième élément (26) sur le premier élément (88) et lorsque l'agencement (90) de corps de verrouillage est dans la position de couplage (KP).

12. Dispositif de couplage selon l'une quelconque des revendications 1 à 11, **caractérisé en ce que** la partie d'entraînement (138) est configurée de telle sorte que l'agencement (90) de corps de verrouillage est poussé hors de la denture de couplage (94) lorsqu'une force d'entraînement est transmise depuis le deuxième élément (26) sur le premier élément (88) et lorsque l'agencement (90) de corps de verrouillage est pivoté hors de la position de couplage (KP) en direction de la position de libération (FP).

13. Agencement de couplage selon l'une quelconque des revendications 1 à 12, **caractérisé en ce que** le support (110) de corps de verrouillage est maintenu dans une position de libération du support de corps de verrouillage au moyen d'un dispositif à ressort élastique, le dispositif à ressort élastique comprenant de préférence un agencement de ressort de compression (148) agissant entre un pion (142) en butée contre le deuxième élément (26) et l'élément (116) formant corps de verrouillage.

14. Unité de transmission (10), en particulier pour un véhicule à propulsion musculaire, comprenant une roue dentée (88) formant un premier élément rotatif, un arbre de transmission (26) formant un deuxième élément rotatif, la roue dentée (88) étant montée à rotation sur l'arbre de transmission (26), et un agencement de couplage (100) selon l'une quelconque des revendications 1 à 13, la roue dentée (88) étant apte à être reliée à l'arbre de transmission (26) dans un sens de rotation d'entraînement (96) au moyen de l'agencement de couplage (100).
